# EUROPEAN PATENT SPECIFICATION

(11) **EP 1 222 821 B1**
(45) Date of publication and mention of the grant of the patent: **07.04.2004**
(21) Application number: 00973459.1
(22) Date of filing: 12.10.2000
(51) Int. Cl.: H04N 7/18

(54) **SYSTEM AND METHOD FOR CONTROLLING THE STORAGE AND REMOTE RETRIEVAL OF SURVEILLANCE VIDEO IMAGES**
VORRICHTUNG UND VERFAHREN FÜR SPEICHERUNGS- UND ENTFERNTE WIEDERGEWINNUNGSSTEUERUNG VON ÜBERWACHUNGSBILDERN
SYSTEME ET PROCEDE DE GESTION DU STOCKAGE ET DE LA RECHERCHE A DISTANCE D'IMAGES DE VIDEOSURVEILLANCE

(30) Priority: 12.10.1999 US 416331; 12.10.1999 US 417162
(43) Date of publication of application: 17.07.2002
(73) Proprietor: Vigilos, Inc., Seattle, WA 98121 (US)
(72) Inventor: AMINI, Shaun, S., Ashburn, VA 20147 (US); BACKLUND, Gary, Potomac Falls, VA 20165 (US)
(74) Representative: Lomas, Geoffrey Michael
(86) International application number: PCT/US2000/028101
(87) International publication number: WO 2001/028251

(56) References cited:
- EP-A- 0 804 031
- WO-A-97/07486

## Description

### Background

### Field of the Invention

The present invention relates to video surveillance and monitoring systems, and more particularly, to video surveillance and monitoring systems that stores video image data in an off-site storage site.

### Discussion of the Related Art

Surveillance and monitoring systems have played a valuable role in many contexts. For example, surveillance video cameras are well renowned for capturing images of criminals that have burglarized various financial and commercial institutions. Video cameras have also played an increasingly valuable role in less visible contexts. For example, video cameras are increasingly being used to monitor work environments to ensure productivity or compliance with operating procedures. Additionally, video cameras are also valuable in providing evidence that establishes the non-occurrence of events in insurance fraud cases.

Video surveillance and monitoring systems will continue to proliferate as new applications of the video technology are identified. Limitations of conventional video surveillance and monitoring systems, however, greatly reduce the ultimate effectiveness of the technology.

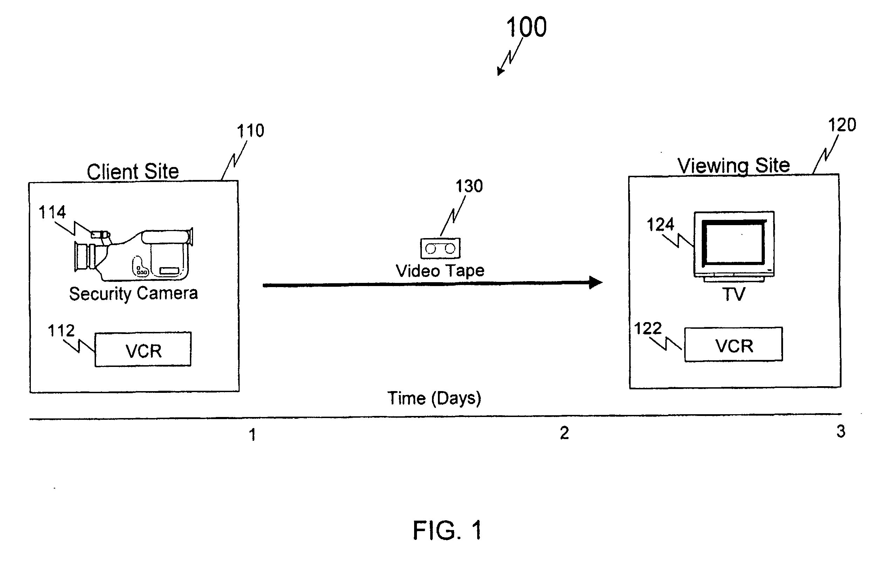

FIG. 1 illustrates a conventional video surveillance and monitoring environment 100. Video surveillance and monitoring environment 100 includes a client site 110 and a viewing site 120. Client site 110 is a self-contained operation that governs the capture and storage of analog video image data. In a typical installation, client site 110 consists of a video camera 114 coupled to a video cassette recorder (VCR) 112. Analog video data captured by video camera 114 is stored onto a videotape 130 that has been inserted into a VCR 112.

As one can readily appreciate, conventional surveillance and monitoring environment 100 is subject to severe limitations. First, client site 110 is a highly insecure environment. Access to the sole copy of the captured image data is limited only by the relative security procedures that control the access to the location where videotapes 130 are stored. For example, in a criminal context, a perpetrator need only access the location in client site 110 that houses VCR 112. Once accessed, videotape 130 can be located and ultimately removed from the premises, thereby removing the sole piece of evidence.

Even assuming that videotape 130 has not been removed from client site 110, the video surveillance operation is severely limited. The ultimate goal of the surveillance process is to provide images to a particular party that is responsible or interested in the events occurring at client site 110. That individual is often located in a remote location relative to client site 110. If that remote location, illustrated as viewing site 120, is separated by a significant geographical distance, then videotape 130 needs to be shipped through insecure channels (e.g., express mail) to the interested party. Even if the videotape 130 is hand-delivered, videotape 130 may not reach the hands of the interested party residing in viewing site 120 for up to 3 days. This substantial delay is often unacceptable in situations that require a swift or timely response by the responsible organization.

In addition to the security and responsiveness issues described above, video surveillance and monitoring environment 100 also suffers from inherent technical limitations. Videotape image storage is limited by the physical capacity of videotape 130. This limited capacity creates numerous problems in situations that require continual surveillance.

Human factors are therefore necessary to cope with the physical limitations of surveillance and monitoring environment 100. The entry of human factors creates another set of operational problems. VCRs 112 may not be reloaded. Recorded videotapes 130 can also be misplaced, mislabeled, or cataloged in error. These errors are particularly problematic because the archival nature of video surveillance and monitoring environment 100 would be severely impacted.

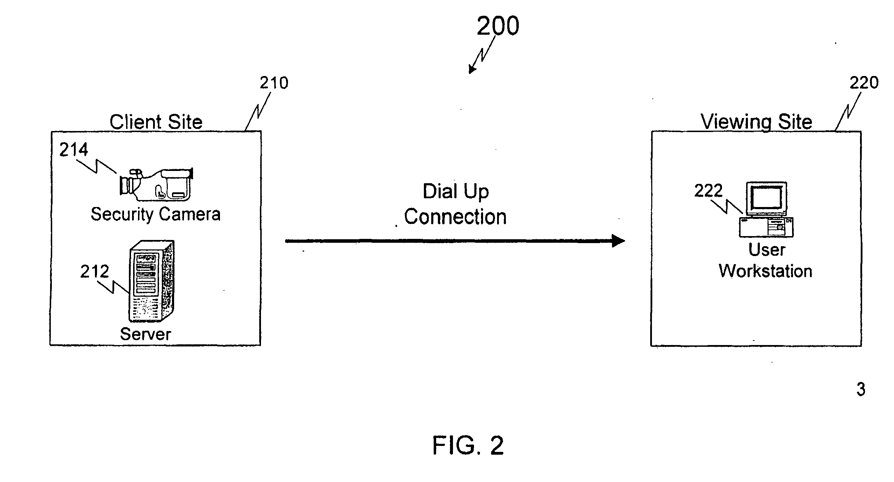

Advances in computer technology have augmented the functionality of conventional video surveillance systems. In particular, analog video image systems have been replaced by digital video image systems. An example of this updated video surveillance and monitoring environment is illustrated in FIG. 2.

Video surveillance and monitoring environment 200 includes client site 210 and viewing site 220. In a typical installation, client site 210 consists of a video camera 214 coupled to a server computer 212. Video images captured by video camera 214 are stored on an electronic storage medium (e.g., hard drive, tape drive, etc.) coupled to server computer 212. Video images stored on server computer 212 are accessible by user workstation 222 at viewing site 220 via a direct dial-up connection. An example of a digital video image system for locally storing video data can be found in International Application No. 97/07486. In the system described in WO 97/07486, an on-site data management system stores video data as it is captured by a camera. An example of a remote video image system can be found in EP 0 804 831. The system described in EP 0 804 031 facilitates the transmission of camera control signals over a network, but does not address secure remote storage of video images.

The ability to retrieve images via a direct dial-up connection significantly improves the timeliness of delivery of image data to an interested party. However, video surveillance and monitoring environment 200 is still subject to significant limitations. In particular, the functionality at client site 210 is impacted by significant maintenance issues.

First, the ongoing system maintenance of customized and proprietary software resident on server computer 212 impacts overall system availability. This is particularly problematic when considering the multiplicative effect introduced by a client's needs at multiple client sites 210. Each individual server computer 212 would require a separate software upgrade whenever a software patch or new version becomes available. In a similar manner, software resident on each user workstation 222 may also require frequent software updates.

Maintenance issues are also relevant to the actual system operation of server computer 212. Although the capacity of electronic storage devices (not shown) coupled to server computer 212 is much larger relative to the storage capacity of videotapes 130, a technician must routinely get involved in the coordination of the overall video image archive. For example, the technician must monitor the relative fullness of the storage device that is in active use to ensure that memory is not being overrun. Further, a technician must ensure that removable storage devices are not misplaced, mislabeled, or cataloged in error.

In general, the existence of a physical library of removable storage devices leads to a highly insecure environment. In a similar fashion to video surveillance and monitoring environment 100, access to the sole copy of the archived video image data is limited only by the relative security that controls the physical access to the library of removable storage devices. The removal of a removable storage device from client site 210 is an inherent fault of video surveillance and monitoring environment 200.

The security issues surrounding dial-up access to stored video image data is also significant. Remote users operating at client workstation 222 are typically given access to data stored at client site 210 based upon a simple check of a user ID and corresponding password. This level of access security is minimal and, in many cases, is entirely inappropriate for maintaining sufficient privacy of stored video image data.

More generally, access to video image data stored at client site 210 is also limited by the communications capacity of server computer 212. In many instances, server computer 212 is configured with only a single communication port (not shown). This single communication port limits the remote access to only a single user at a time. In these cases, multiple, simultaneous remote user access would not be possible, thereby limiting the overall utility of video surveillance and monitoring environment 200. It should also be noted that access to server computer 212 via a dial-up connection would also be subject to any applicable long distance or ISDN charges.

As thus described, video surveillance and monitoring environments 100, 200 each have significant limitations that affect one or more characteristics of system reliability, system security, and system performance. What is needed therefore is a video surveillance and monitoring environment that addresses each of these concerns while providing virtually unlimited and instantaneous remote access to video image data.

### Summary of the Invention

A system and a method according the invention are set out in claims 1 and 34, respectively.

The present invention provides a framework for real-time off-site video image storage that enables increased functionality in the retrieval of video images. An off-site storage site is coupled to camera servers at client sites via a private network. Each camera server is further coupled to one or more surveillance cameras.

Video images captured by cameras located at the client sites are forwarded to an off-site server via a camera server. Video images received by the off-site server are produced for live viewing and/or archived in an image database.

Users can retrieve live or archived video images through a client workstation that communicates with the off-site server over the public Internet. Retrieval of video images is based on a web-browser interface. Archived video images can be viewed through VCR-type controls that control the playback of cached video images. Live viewing of video images is supplemented by real-time camera control functions that alter the pan-tilt-zoom (PTZ) position of the camera producing the live images. Commands for controlling the PTZ camera are encoded by the client workstation and transmitted to the off-site server. The off-site server, operating as a proxy between the client workstations and the camera servers, converts the camera control codes into binary-coded camera control command strings that are recognizable by the particular camera.

### Brief Description of the Drawings

The foregoing and other features and advantages of the invention will be apparent from the following, more particular description of a preferred embodiment of the invention, as illustrated in the accompanying drawings.
FIG. 1 illustrates an analog video surveillance and monitoring environment.
FIG. 2 illustrates a digital video surveillance and monitoring environment that is accessed via a dial-up connection.
FIG. 3 illustrates a digital video surveillance and monitoring environment that stores video image data at an off-site storage location.
FIG. 4 illustrates the network and surveillance elements existing at a client site.
FIG. 5 illustrates the applications that reside on a server component at an off-site storage location.
FIG. 6 illustrates the applications that reside on a client component.
FIG. 7 is a flowchart of the processing steps of an event driven image acquisition process.
FIG. 8 is a flowchart of the processing steps of the transmission and storage of video image data at an off-site storage facility.
FIGS. 9A-9C illustrate an embodiment of a graphical user interface that enables the acquisition and display of archived video image data.
FIGS. 10A-10C illustrate an embodiment of a graphical user interface that enables the viewing and interactive control over live video image data.
FIG. 11 is a flowchart of the processing steps in producing live video images.
FIG. 12 is a flowchart of the processing steps of storing video image records into an image database.
FIG. 13 is a flowchart of the processing steps of controlling a surveillance camera from a location remote from a client site.

### Detailed Description of the Preferred Embodiments

A preferred embodiment of the invention is discussed in detail below. While specific implementations are discussed, it should be understood that this is done for illustration purposes only. A person skilled in the relevant art will recognize that other components and configurations may be used without parting from the scope of the invention.

Video surveillance and monitoring systems are being applied in an increasing variety of contexts, ranging from traditional security applications (e.g., financial institutions) to commercial applications (e.g., manufacturing, power plant, etc.). In many cases, the needs of a single corporate entity extend beyond a localized surveillance and monitoring system within a single site. Corporate entities can contract for a surveillance and monitoring solution to be applied across multiple sites that are located not only throughout the United States but also throughout one or more foreign countries.

From any corporate entity's standpoint, a practical video surveillance and monitoring solution should provide functionality that easily scales across a rapidly changing corporate landscape. Critical issues for these corporate entities include concerns over the security, ease of access, convenience, and maintainability of the system.

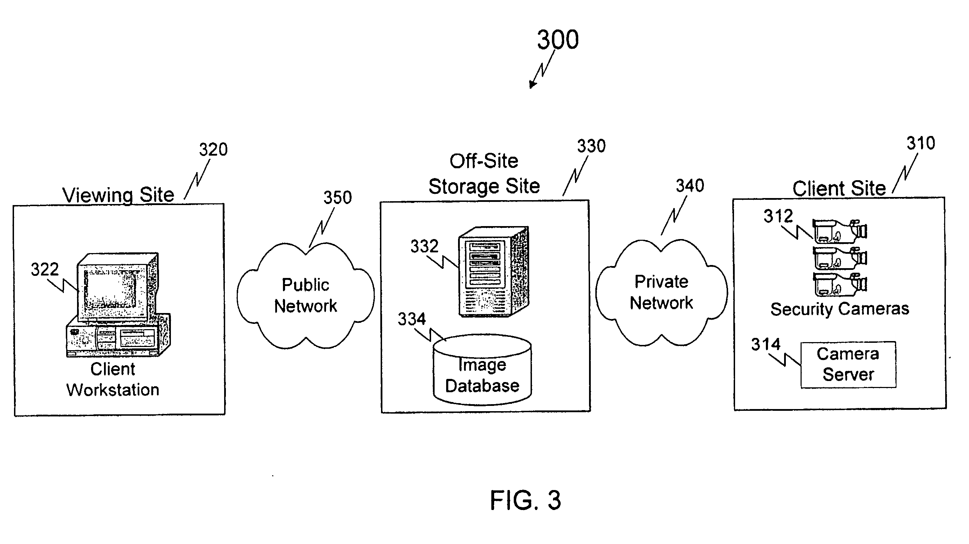

FIG. 3 illustrates a high-level overview of a video surveillance and monitoring environment 300 of the present invention that addresses the above-mentioned needs in a scalable fashion. Video surveillance and monitoring environment 300 includes a client site 310, a viewing site 320, and an off-site storage site 330. Client site 310 includes one or more security cameras 312 that acquire video image data for transmission to off-site storage site 330 via a private network 340.

In one embodiment, private network 340 is a private backbone network that may be controlled by the service provider that controls the operation of off-site storage site 330. In another embodiment, private network 340 is a virtual private network that is operative over a public network 350 (e.g., the Internet).

Video image data that is transmitted to off-site storage site 330 is received by off-site server 332. Although off-site server 332 is illustrated in FIG. 3 as a single computer, it should be recognized that the functionality described below can be performed by one or more server computers. Video image data received by off-site server 332 can be archived within image database 334 for subsequent retrieval by client workstation 322 and/or made available to client workstation 322 for live viewing. As would be appreciated by one of ordinary skill in the relevant art, image database 334 can be implemented in a variety of alternative forms that facilitate the storage of large video image files. For example, image data can be stored in a proprietary "binary" format to contain xMB of images. Alternatively, image data can be stored in a file system using directory trees.

In a preferred embodiment, client workstation 322 views video image data using a web-browser enabled user interface. As will be described in detail below, client workstation 322 can also effect pan-tilt-zoom (PTZ) control of one or more security cameras 312 at client site 310 via communication with off-site server 332. In a preferred embodiment, communication between client workstation 322 and off-site server 332 is operative over public Internet 350.

Prior to discussing the operation of video surveillance and monitoring environment 300 in detail, several notable features enabled through the architecture of the present invention are examined.

A first feature of the present invention is the flexibility of one or more client workstations 322 in accessing video image data (live or archived) that is captured by one or more security cameras 312. This flexibility in access has two significant aspects. First, a single client workstation 322 can access, in rapid succession, video image data that is captured by a plurality of security cameras 312, a subset of which, may be located at separate client sites 310.

For example, consider a large corporate entity having ten client sites 310, wherein each client site 310 has nine security cameras 312. Assume that an individual located at a corporate headquarters (i.e., viewing site 320) desires to view video image data (live and/or archived) that is captured by site 3/camera 7, site 5/camera 2, and site 7/camera 9. The video image data generated by the three geographically distinct cameras 312 can be sequentially accessed, in rapid succession, through a single communication session with off-site server 332. Significantly, client workstation 322 is not required to sequentially establish an independent communication session with three on-site servers 212 located at distinct client sites 210. This speed of access is a key element in the provision of a centralized view of a corporate entity's operation.

A second aspect of the flexibility in access is related to the simultaneous viewing of video image data generated by a single security camera 312. In the present invention, multiple client workstations 322 located at separate viewing sites 320 can each independently communicate with off-site server 332 to obtain the video image data (live and/or archived) that is captured by a single security camera 312.

A second feature of the present invention is the improved security of the captured video image data. As noted, all of the captured video image data is transmitted in real-time to off-site storage site 330 via private network 340. The transmitted video image data is subsequently stored in image database 334, which serves as a general archive facility. This general archive facility is not exposed to activity at client site 310. Accordingly, archived video image data is not exposed to adverse conduct (e.g., stealing of an incriminating videotape or removable storage device) by individuals at client site 310.

A third feature of the present invention is the improved maintainability of the software that is operative in client workstation 322 and off-site server 332. All software updates can be centralized at off-site server 332. These updates can be effected at client workstation 322 through the transmission of web page data, including Java applet code, that can be used by a web browser in rendering the user interface and providing system functionality.

A fourth feature of the present invention is the improved levels of network security that can be implemented. Unlike conventional on-site systems that rely solely on user IDs and passwords, the present invention is capable of implementing multiple levels of access security. In particular, off-site storage site 330 can include one or more servers that serve as a repository of client certificates (e.g., X.509 certificates), wherein the service provider operates as its own certificate authority (CA). The client certificates enable client workstation 322 and off-site server 332 to authenticate each other and to negotiate cryptographic keys to be used in a secure socket layer (SSL) communication session. As part of the SSL communication session, off-site server 332 can further require a user ID and password. In this manner, increased confidentiality of video images obtained by the surveillance and monitoring operation can be provided. X.509 certificates and SSL communication are described in greater detail in W. Stallings, *Cryptography and Network Security: Principles and Practice,* Second Edition, 1999. Further features of the present invention will become apparent upon the more detailed description below.

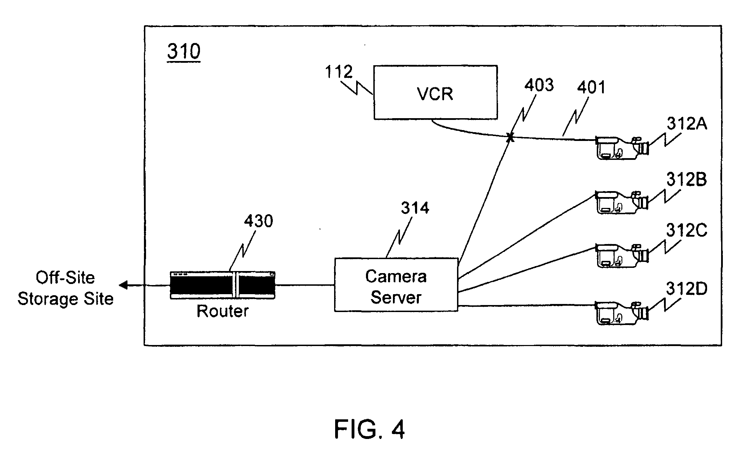

In describing the operation of video surveillance and monitoring environment 300, a detailed description of the components at client site 310 is first provided. FIG. 4 illustrates an example configuration of network and surveillance elements that can exist at client site 310. As shown, client site 310 includes four cameras 312A-312D, each dedicated to a particular view at client site 310, that are coupled to camera server 314. Camera server 314 communicates with off-site storage site 330 via router 430. It should be noted that the concepts of the present invention can be applied to a variety of camera types existing at client site 310, including cameras that produce composite NTSC video image data as well as self-contained web server and network cameras (e.g., AXIS 200+ Web Camera by AXIS Communications).

One of the advantages of the present invention is its ability to leverage an existing surveillance infrastructure that can exist at client site 310. For example, consider a conventional analog video surveillance system having a video camera 312A that produces composite NTSC video image data. In this conventional arrangement, captured video images are transmitted to VCR 112, via link 401, for storage onto a videotape 130. The present invention can be applied to this existing infrastructure by splitting the video signal existing on link 401 at junction 403. The video signal captured by camera 312A can then be transmitted to camera server 314. Upon receipt by camera server 314, the captured video signal can be converted into an appropriate format (e.g., JPEG, MPEG, etc.). As would be appreciated by one of ordinary skill in the relevant art, the concepts of the present invention are not dependent upon a particular video format.

Camera server 314 is generally operative to transmit captured video images to off-site server 332. To support this operation, camera server 314 preferably includes hardware/software that enables video image compression, web-server functionality, and network communications. One example of camera server 314 is the AXIS 240 camera server manufactured by AXIS Communications.

As illustrated in FIG. 4, camera server 314 can be coupled to a plurality of cameras 312A-312D. In one embodiment, camera server 314 is coupled to cameras 312A-312D via a multiplexer (not shown). Camera server 314 can also be synchronized to network time servers under the authority of the National Institute of Standards and Technology (NIST). This synchronization enables camera server 314 to accurately record time of day information.

In a preferred embodiment, communication between camera server 314 and off-site server 332 is effected using the hypertext transfer protocol (HTTP). As further illustrated in FIG. 4, camera server 314 communicates with off-site server 332 using the appropriate routing facilities (illustrated at client site 310 as router 430).

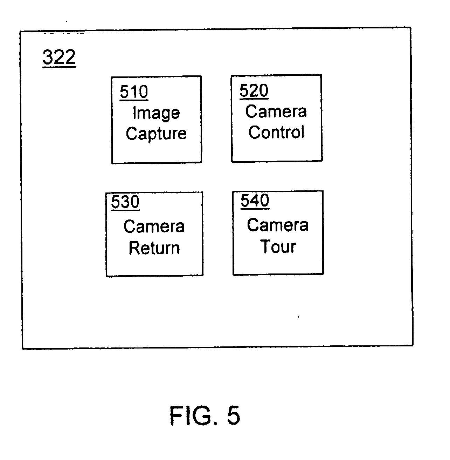

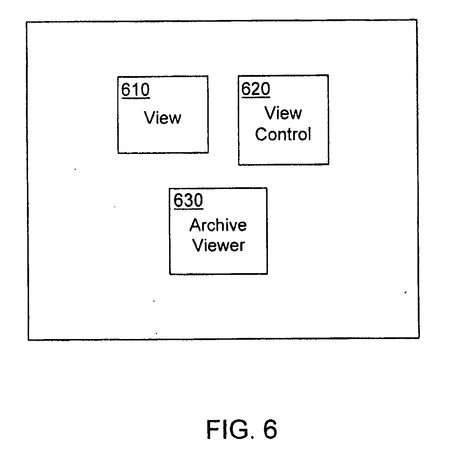

Having described the hardware facilities existing in video surveillance and monitoring environment 300, a brief description of the software facilities is now provided. In particular, the application programs resident within the computing environments supported by off-site server 332 and client workstation 322 are illustrated in FIG. 5 and FIG. 6, respectively.

The computing environment supported by off-site server 332 includes ImageCapture application 510, CameraControl application 520, CameraRetum application 530, and CameraTour application 540. ImageCapture application 510 is a program responsible for collecting images from camera servers 314. As will be described in detail below, the collection of video image data can be event-driven based upon the events occurring at client site 310. After ImageCapture application 510 collects images from camera servers 314, ImageCapture application 510 can control the production of live video images and/or write the video image data to image database 334 for archive purposes. ImageCapture application 510 can also be configured with the additional capability of placing another image (i.e., logo) onto the original image in anticipation for public viewing.

ImageCapture application 510 is the application responsible for enabling individuals at client workstations 322 to view video images that are captured by any camera 312 that is coupled to the network. As described below, users at client workstations 322 can view live video images or retrieve archived video images that are stored in image database 334 at off-site storage site 330.

CameraControl application 520, CameraReturn application 530, and CameraTour application 540 can be embodied as Java servlet programs that are collectively involved in the PTZ control of the cameras 312 that are coupled to camera servers 314. More specifically, CameraControl application 520 is responsible for receiving camera control commands that are generated by ViewControl application 620. As illustrated in FIG. 6, ViewControl application 620 can be embodied as a Java applet program resident on client workstation 322. After interpreting the received camera control command codes from ViewControl application 620, CameraControl application 520 forwards a binary-coded camera control command string to the intended camera 312.

CameraRetum application 530 is responsible for returning a PTZ camera 312 to a specific preset after a given period of time. CameraReturn application 530 ensures that a PTZ camera 312 is always looking at something useful no matter where it was left by the last user. For example, consider a scenario where a user at client workstation 322 desires to view live images that are being captured by camera 312D at client site 310. Assume further that ImageCapture application 510 is configured for providing live images as well as storing archived images captured by camera 312D. If the user, through ViewControl application 620 at client workstation 322, inadvertently changes the position of camera 312D to an unusable position, then all of the captured video image data to be stored in image database 334 would be worthless until the camera 312 is returned to a usable viewing position. CameraRetum application 530 thereby ensures that a PTZ camera 312 is always capturing useful video image data. As part of this process, the administrator can designate an arbitrary number of minutes, the expiration of which will cause a command to be sent to return the PTZ camera 312 to a preset position.

CameraTour application 540 is capable of moving a PTZ camera 312 to a list of preset positions, allowing the PTZ camera 312 to pause at each preset position for a period of time specified by the end user.

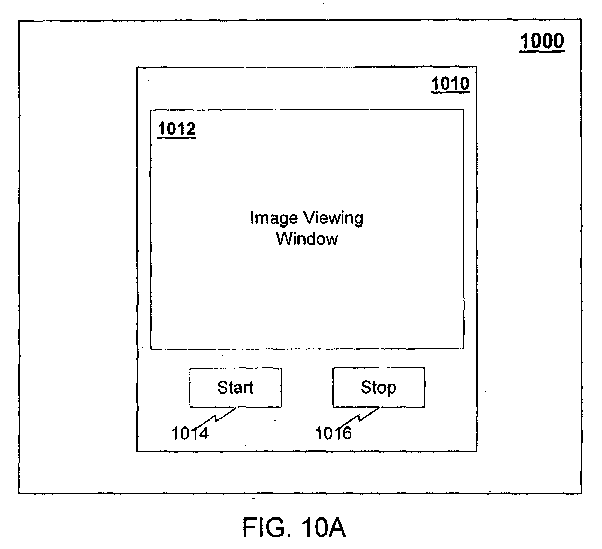

Referring now to FIG. 6, the computing environment supported by client workstation 322 includes View application 610, ViewControl application 620, and ArchiveViewer application 630. View application 610 can be embodied as a Java applet program that controls the display of the current live image from a selected camera 312 in a window in a web-browser interface. As noted, the current live image is published by ImageCapture application 510 operating in the computing environment supported by off-site server 332. An example of this user interface is illustrated in FIG. 10A.

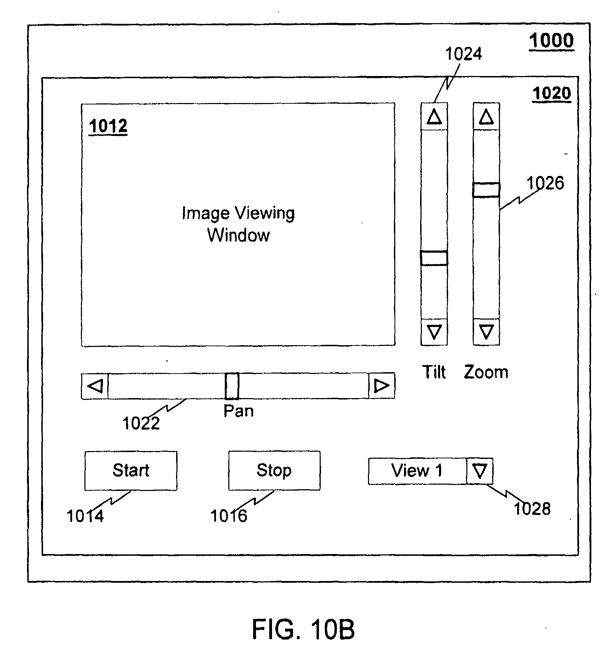

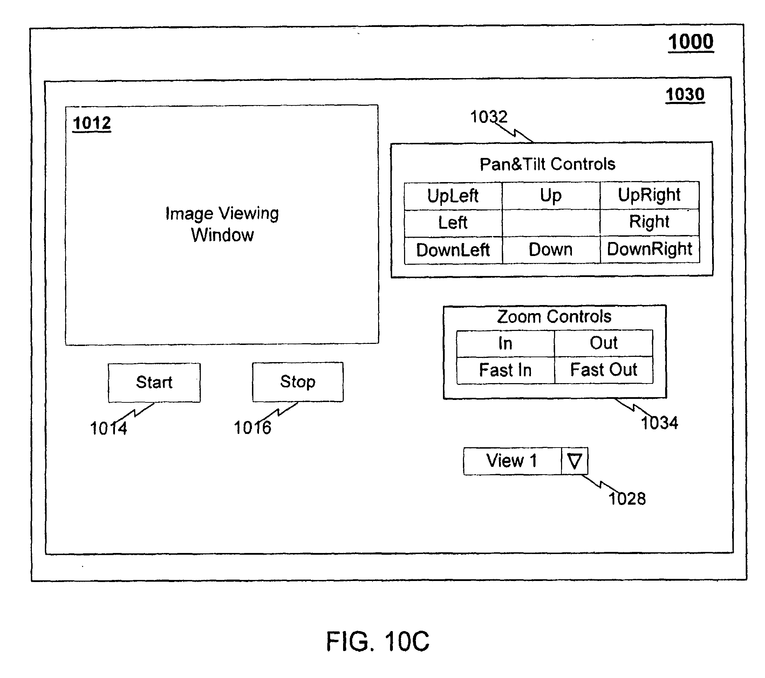

ViewControl application 620 can be embodied as a Java applet program that displays the current live image from a selected camera 312 and has controls for moving a PTZ-enabled camera 312. These control commands are sent out as codes to CameraControl application 520 operating at off-site server 322, which in turn contacts the PTZ-enabled camera 312 via camera server 314. Examples of this user interface are illustrated in FIGS. 10B and 10C.

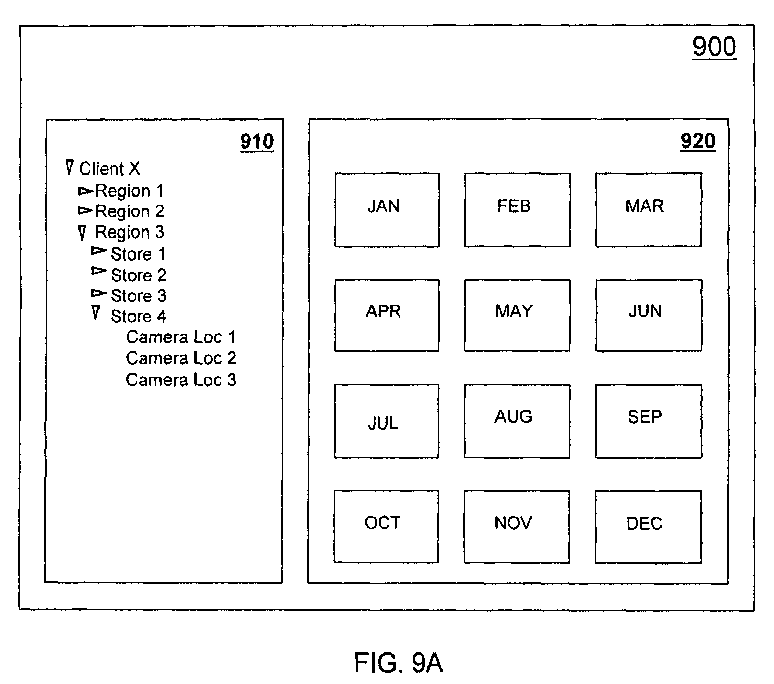

ArchiveViewer application 630 can be configured as a program, combining hypertext markup language (HTML), JavaScript, Java, etc., that determines what archived video image data a user at client workstation 322 desires to view. After the archived video image data is identified, ArchiveViewer application 630 caches a predetermined number of video images, then displays the video images for the user. ArchiveViewer application 630 includes a graphical user interface with VCR-type controls for altering the speed of playback (e.g., 30 images every second) in either direction. An example of this user interface is illustrated in FIGS. 9A-9C.

Having described the general software components in video surveillance and monitoring environment 300, a detailed description of the primary processing elements is now provided. At off-site server 332, ImageCapture application 510 controls the production of live video image data as well as the archive storage of video image data in image database 334.

The retrieval of captured image data from a particular camera 312 can be controlled by ImageCapture application 510 in a variety of ways. The control of this retrieval process is enabled by the definition of a configuration file for each camera 312. In one embodiment, the configuration file includes the following parameters: a recording type (live only/archive only/both), a database directory, an event processing selection (y/n), event processing options, a start/stop time, and a time-zone offset.

The recording type parameter informs ImageCapture application 510 whether captured video image data should only be published for live viewing, whether captured video image data should only be archived in image database 334, or whether captured video should be published for live viewing and be archived in image database 334. The database directory parameter identifies the database directory in which the captured video image data should be written for archive purposes. The event processing selection parameter informs ImageCapture application 510 whether the camera 312 associated with the configuration file is to be controlled in accordance with the occurrence of events at client site 310. Event processing is further defined by the event processing options parameters. The start/stop time parameter is used to configure ImageCapture application 510 such that video images are retrieved from the associated camera 312 during a specified period of time (e.g., office hours). Finally, time-zone offset parameter identifies the relative time offset of the time zone in which the associated camera 312 is located relative to the time-zone of off-site storage site 330. The time-zone offset parameter enables off-site server 332 to properly index video image data records that are stored in image database 334.

With the specified parameters in the configuration file, ImageCapture Application 510 can flexibly control the retrieval of video images from camera 312. In one method, a user specifies the relevant start/stop time parameters. As noted, the start/stop time parameters are used to define a period of time during which captured video images are forwarded to ImageCapture Application 510 by camera server 314. This scenario represents the most common form of surveillance and monitoring where a user can specify the retrieval of video image data during an establishment's hours of operation.

Alternatively, or in combination, with the above retrieval scenario, a user can also specify an event-driven recording scheme. In this scheme, the configuration file can be used to enable ImageCapture Application 510 to react to events that occur at client site 310. For example, camera server 314 can be configured to receive event data generated by various types of physical events, including such actions as a door opening, a cash register opening, motion detected in a camera's vicinity, the activation of a piece of machinery, etc. Hi-Low logic data representative of these types of physical events can be forwarded by camera server 314 to ImageCapture Application 510 to define various state transitions.

To facilitate this form of event-driven processing, the event processing selection parameter in the configuration file is set to an affirmative state (e.g., "Y"). This parameter value signals to ImageCapture Application 510 that event data received from camera server 314 should be processed in accordance with the event processing options parameters in the configuration file.

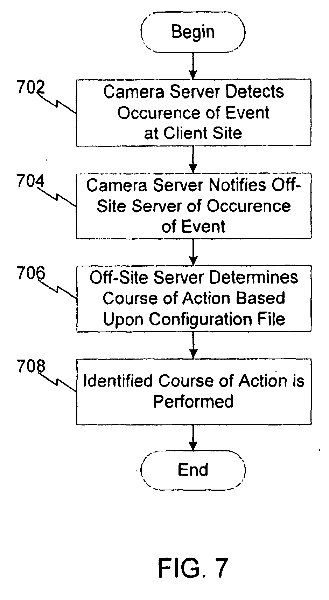

The general event driven processing scheme is illustrated by the flowchart in FIG. 7. In the process illustrated by FIG. 7, it is assumed that the event processing selection parameter in the configuration file is set to an affirmative state. The process begins at step 702 where camera server 314 detects the occurrence of an event (e.g., opening of a door) at client site 310. The detection of a change in state (e.g., low to high) of an event variable prompts camera server 314, at step 704, to notify ImageCapture Application 510 of the occurrence of the event.

Next, at step 706, ImageCapture Application 510 determines a course of action based upon the occurrence of the event. Determination of the course of action is based upon the event processing options parameters in the configuration file. Performance of the determined course of action occurs at step 708.

There are virtually an unlimited number of possible courses of action that could be followed upon the detection of an event. In a simple example, the occurrence of an event (e.g., opening of a door) prompts ImageCapture Application 510 to issue a request for video image data. This request for video image data can be specified in various ways. ImageCapture Application 510 can instruct camera server 314 to forward a certain amount of images, e.g., N video images, N seconds/minutes of video images, video images until the event stops, etc.

Other courses of action in response to the occurrence of an event can include the initiation of a notification process. In one example, the notification process includes a text message page to a predefined recipient(s) alerting the recipient(s) of the occurrence of the event. In another example, the notification process includes an email to a predefined recipient(s) alerting the recipient(s) of the occurrence of the event. The email notification can also include an attachment that comprises one or more video images.

An email notification having a collection of video images as an attachment is a particularly significant feature. Consider a scenario where a client has set up an event-driven process that is based upon the activation of an alarm generated by the opening of a door. An individual responsible for security at client site 310 can be notified immediately of the occurrence of the event via email. The attachment to the email includes video images that have likely captured the intruder as he entered through the door in an unauthorized manner. The real-time generation of emailed messages may enable the client to immediately take appropriate action. Significantly, as the video images of the intruder have already been transmitted to off-site storage site 330, there is no possibility that the intruder can gain access to and remove the only physical copy of the recorded video images.

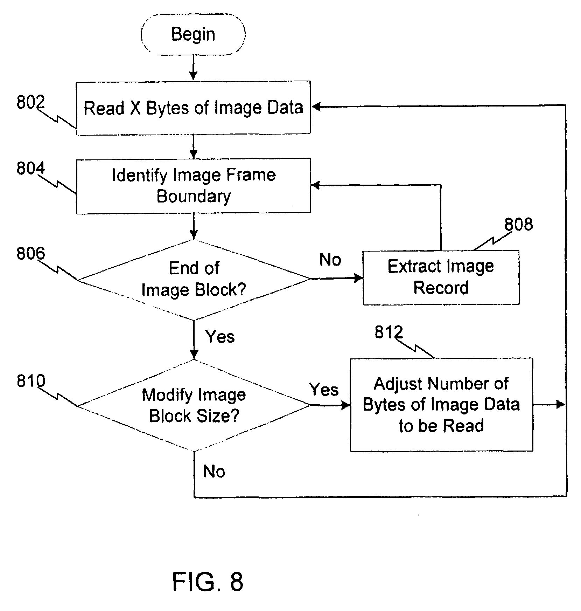

As noted, a significant feature of the present invention is the real-time dynamic off-site storage of video images. The process of receiving and storing video image data is illustrated in the flowchart of FIG. 8.

The process begins at step 802 where ImageCapture application 510 reads X bytes of video image data from a memory buffer. The video image data stored in the memory buffer is received by off-site server 332 in response to a HTTP request by ImageCapture application 510. The read block of video image data includes one or more video images. As one can readily appreciate, the size of each image frame in the block of video image data can vary widely depending upon the characteristics of the scene being captured. Scenes having a relatively high number of widely contrasting colors and light intensities will not be amenable to significant video image data compression relative to a scene having a generally monotonic characteristic. For this reason, a single block size of video image data that is read from the memory buffer can have a highly variable number of image frames contained therein.

In the present invention, ImageCapture application 510 dynamically controls the size of the block of video image data that is read from the memory buffer. This control is effected through action by ImageCapture application 510 to effectively limit the number of frames included within the read block of video image data. For example, in one embodiment, ImageCapture application 510 modifies the read block size of image data such that only N (e.g., two) frames are to be expected given a calculated average image frame size. This control mechanism is illustrated by the loop created by steps 802-812 in FIG. 8.

After a block of image data is read at step 802, ImageCapture application 510 proceeds to extract individual image frames from the read block of image data. More specifically, at step 804, ImageCapture application 510 searches for an image frame boundary that identifies the ending point of a first image frame. At step 806, ImageCapture application 510 determines whether the end of the read image block has been reached. If the end of the read image block has not been reached, then the image frame can be extracted at step 808. After an image frame has been extracted, ImageCapture application 510 then loops back to step 804 to identify the next image frame boundary in the read image block.

If at step 806, ImageCapture application 510 determines that the end of the read image block has been reached, then ImageCapture application 510 determines, at step 810, whether a modification in the read block size is needed. For example, assume that a 40k image block has been read, where the 40k image block contains five video images of approximately 8k size. Assume further that it is desired by ImageCapture application 510 to have a block that includes only two image frames. In this scenario, off-site server 332 would adjust, at step 812, the amount of bytes of image data to be read from the memory buffer to about 16k. A similar adjustment can also be made where the previously read block of image data only includes one image frame. If ImageCapture application 510 determines, at step 810, that a modification in read block size is not required, then ImageCapture application 510 reads the same amount of image data from the memory buffer.

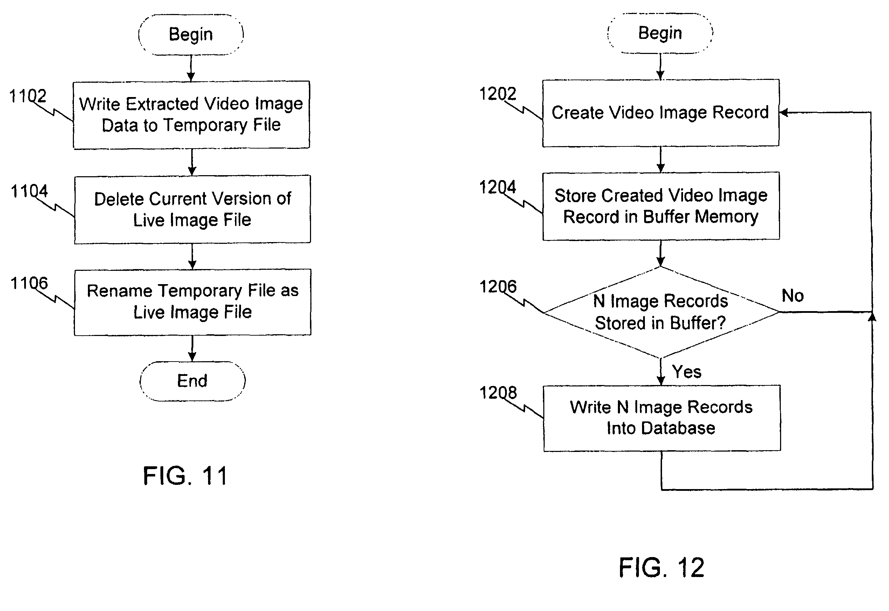

After an image frame has been extracted at step 808, it is ready to be processed for live production and/or for archive storage in image database 334. As noted, the recording type parameter in the configuration file informs ImageCapture application 510 whether captured video image data should only be published for live viewing, whether captured video image data should only be archived in image database 334, or whether captured video should be published for live viewing and be archived in image database 334. The processing of video images in both the live production and archive storage scenarios are now discussed with reference to the flowcharts of FIG. 11 and FIG. 12, respectively.

In the live production scenario, ImageCapture application 510 stores each extracted video image into a file on off-site server 332 that is accessible by a user at client workstation 322. In one embodiment of the present invention, at step 1102, ImageCapture application 510 first writes the extracted video image data into a temporary file. Upon completion of the writing of the extracted video image data to the temporary file, the temporary file can then be renamed to a file (e.g., live_1.jpg) that can be accessed by client workstation 322. Prior to the renaming of the temporary file, the current version of the "live" file is first deleted at step 1104. After the current version of the "live" file is deleted, the temporary file is then renamed, at step 1106, as the new version of the "live" file. In this manner, video images that are continually extracted from the block of image data are each initially written to the same temporary file then subsequently renamed to the same "live" file (e.g., live_1.jpg).

To facilitate user access, the "live" file is preferably located in a directory that is associated with the camera 312 that has captured the now extracted video image. In one embodiment, the directory structure in the file system is hierarchically based in accordance with parameters Exxxx, Lxxxx, and Cxxxx, where Exxxx represents the client number, Lxxxx represents the location number, and Cxxxx represents the camera number.

To enable the retrieval of the "live" file, View application 610 is configured with the Exxxx, Lxxxx, and Cxxxx parameters. View application 610 can then forward a request to off-site server 332 for a transfer of the file "live_1.jpg" located in a specified place within the hierarchical directory structure.

It should be noted that the writing of data by ImageCapture application 510 into the temporary file and the subsequent renaming to the "live" file may not occur at the same rate as the transfer of the "live" file to client workstation 322. For example, assume that ImageCapture application 510 effectively writes video image data into the "live" file at a rate of three image files per second. Client workstation 322, on the other hand, may not be capable of reading the "live" file at that rate. For example, due to the limited speed of the Internet connection to off-site server 332, client workstation 322 may only be able to retrieve every third "live" file that has been written by ImageCapture application 510. In essence, client workstation is reading the "live" files at a rate of one frame per second. Notwithstanding this variance in the rate of reading of client workstation 322 as compared to the rate of writing of ImageCapture application 510, client workstation 322 is still able to provide the user with a live view of the scenes being captured by camera 312.

FIG. 10A illustrates an example of a user interface 1010 that facilitates live viewing of captured video images. In one embodiment, user interface 1010 comprises an image viewing window 1012, start button 1014, and stop button 1016. Upon the initiation of View application 610, client workstation 322 sends requests to off-site server 332 to retrieve the "live" file stored at the directory of the file system designated for the camera 312 of interest. Stop button 1016 enables the user to terminate the "live" file retrieval process, while play button 1014 enables the user to reinitiate the "live" file retrieval process. Further features of the general live viewing and control interface 1000 are discussed in detail below.

Having described the production of live video images, the archive process is now described. As noted, the production of live video images can occur simultaneously with the archive storage of the same video images.

The archive storage process is illustrated by the flow chart of FIG. 12. The process begins at substantially the same point as the process of producing live images. In particular, the flowchart of FIG. 12 begins, at step 1202, after a video image has been extracted from the block of video image data that has been read from the memory buffer. In step 1202, ImageCapture application 510 creates a video image record.

The video image record includes the extracted video image data. Other pieces of information can also be stored as part of the video image record depending upon the goals and features of a particular implementation. In one embodiment, the video image record also includes additional fields of information such as a file name field, a sequence number field, a date-time stamp field, a time zone offset field, and a capture type field.

The sequence number field holds a value that enables ImageCapture application 510 to define a sequential relation among video image records. As such, the sequence number field can serve as an index generated by an incremental counter. The index enables off-site server 332 to identify and retrieve archived video image records from a time period requested by a user.

The date-time stamp field holds a date-time value. In one embodiment, the date-time stamp value is in a yyyy:mm:dd:hh:mm:ss format that enables the storage of year, month, date, hour, minute, and second information. In addition to date-time stamp field, the video image record can also include a time-zone offset field. The time-zone offset field enables off-site server 332 to recognize time-zone differences of the various client sites 310. It should be noted that the date-time stamp field can also be used by off-site server 332 as an index that enables off-site server 332 to retrieve archived video image records from a time period requested by a user.

Finally, the capture type field includes a value (e.g., 1-8) that identifies a type of event that led to the capture of the video image. The value is correlated to an event type based upon a defined list of event types that is stored in a database for that client and camera 312. The capture type field enables off-site server 332 to provide a summary list of triggering events that have led to the initiation of recording at one or more cameras 312 at client sites 310.

After the video image record has been created, ImageCapture application 510, at step 1204, stores the video image record in a buffer memory. Next, at step 1206, ImageCapture application 510 determines whether N (e.g., 24) video image records have been stored in the buffer memory. If ImageCapture application 510 determines that N records have not yet been accumulated in the buffer memory, then the process loops back to step 1202 where the next video image record is created. If ImageCapture application 510 determines that N records have been accumulated in the buffer memory, then ImageCapture application 510, at step 1208, writes the N accumulated video image records into image database 334 at a directory location defined by the Exxxx. Lxxxx, and Cxxxx parameters. The writing of a block ofN video image records into image database 334 relieves the storage devices from having to continually write data into the image database 334. Overall system performance and longevity of the storage devices is thereby improved.

The creation of an image database 334 in off-site storage site 330 enables a significant improvement in access to video images captured through an entity's surveillance and monitoring efforts. As the connection between client workstation 322 and off-site server 332 is facilitated by public Internet 350, access to video image data in image database 334 is vastly more convenient. In the Internet environment, a single session facilitated by a web-browser interface enables a user at client workstation 322 to access video images captured by cameras 312 at multiple client sites 310. Also significant is the ability of multiple users to simultaneously view video images from a single camera 312 at a particular client site 310.

An embodiment of a user interface 900 that enables access to archived video images stored in image database 334 is now described with reference to FIGS. 9A-9C. User interface 900 is implemented as part of a standard web-browser interface generated by off-site server 332 and rendered by client workstation 322.

The general process of retrieving archived video images can comprise two general steps, the selection of a particular camera 312 and the selection of a period of time of interest. As illustrated in FIG. 9A, user interface 900 includes frame 910 and frame 920. Frame 910 enables a user at client workstation 322 to select a particular camera 312. In this process, the user can navigate through varying levels in a hyperlinked hierarchy that describes a particular client's network of cameras. In FIG. 9A, Client X's hierarchy is, for example, divided into three separate regions, wherein Region 3 is further divided into four separate stores. Store 4 is further divided into three camera locations that are assigned to separate views within store 4. Assume that the user has selected the hyperlinked element, Camera Loc 1.

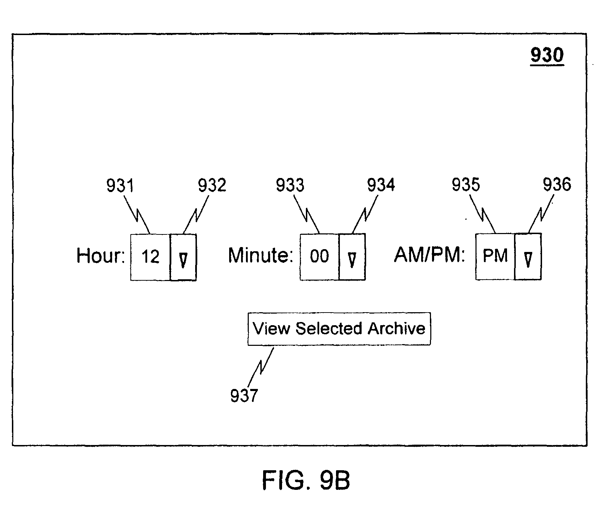

After Camera Loc 1 has been selected by the user, a period of time can now be selected. The process of selecting the period of time can begin in the user interface represented by frame 920. Frame 920 includes a calendar-type interface that displays the months of the year along with the individual days (not shown) within each month. Each day in the calendar displayed within frame 920 can represent hyperlinked text that enables the user to further select a particular time period within the selected day. More specifically, using the interface of frame 920, the user can point and click on a particular day of a particular month and be subsequently presented with frame 930 such as that illustrated in FIG. 9B.

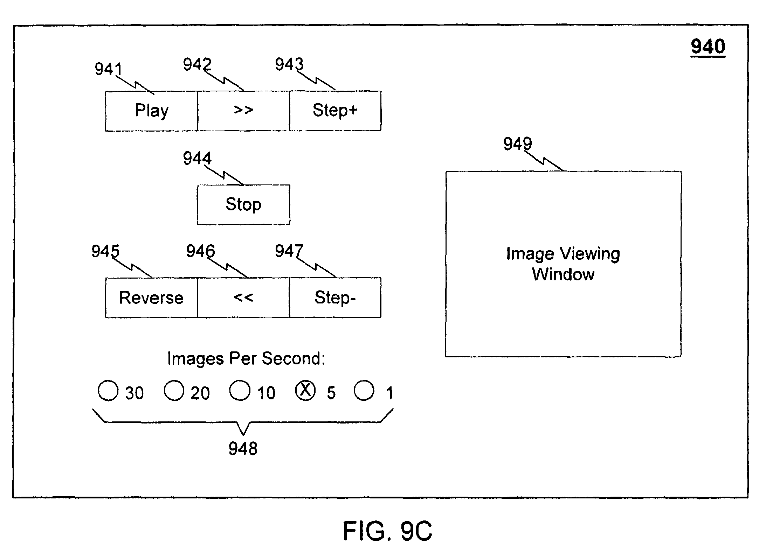

Frame 930 is an embodiment of a user interface that enables the user to select a particular time period within the previously selected day. Frame 930 includes user interface elements 931, 933, and 935, which display the user's selected choice of hour, minute, and AM/PM, respectively. The selection of hour, minute and AM/PM by the user is facilitated by buttons 932, 934, and 936, respectively, which produce a scrollable list of available choices. After the time period has been selected, the user can point and click on button 937. The activation of button 937 produces user interface frame 940 of FIG. 9C.

Frame 940 is an embodiment of a user interface that enables the user to control the viewing of archived video images that have been retrieved from image database 334. Frame 940 includes image viewing window 949 along with VCR-type controls 941-948. Prior to viewing archived images in image viewing window 949, client workstation 322 first caches a block of video images (e.g., 150 video images) from the selected time period. Once the video images have been cached, the user can then control the playback of the video images using VCR-type controls 941-948. VCR-type controls include play button 941, fast play button 942, single frame advance button 943, stop button 944, reverse play button 945, fast reverse play button 946, single frame reverse button 947, and images per second selection 948. As illustrated, images per second selection 948 enables the user to select a frame rate (e.g., 30, 20, 10, 5, or I frames per second) that will control the rate of video image playback. The user initiates the playback by selecting play button 941. Playback of video images will then appear in image viewing window 949. If no images per second selection has been chosen, a default value is used (e.g., 5 frames per second). The user can then modify the images per second rate on the fly during playback. Viewing/searching through video images is also controlled by VCR-type controls 941-948.

After the user has finished viewing the content of the video images generated by Camera Loc 1, the user may wish to view the video images generated by Camera Loc 2 or Camera Loc 3. This situation could occur if the other camera locations would likely provide additional footage of a single event of interest (e.g., burglary). This viewing process is enabled by simply changing the selection of the camera 312 from the choices (i.e., Camera Loc 1, 2, or 3) presented in frame 910 of FIG. 9A. More generally, the user can switch to any camera location that is present within the client's network. This viewing process is enabled by the navigation through higher levels of the camera hierarchy in frame 910 of FIG. 9A.

As described, the retrieval of archived video images can be based upon a selection of a desired time period. More generally, the archived video images can be retrieved upon the basis of any attribute that is stored as part of a video image record. For example, archived video images can be retrieved on the basis of an event specified in the capture type field. In this manner, a user can identify and retrieve all segments of video that have been recorded upon the detection of a particular event (e.g., machine operating condition).

In general, the retrieval of archived video images is substantially instantaneous, and bears no relation to the original location of the camera 312, which captured the video images. Control and access of archived video images is thereby significantly improved relative to the direct dial-up access of archived video images at individual client sites 210.

In addition to the storage of archived images, off-site storage site 330 also enables the production of live images from each camera 312 that is coupled to the network. The process of producing live images was described above with reference to the flowchart of FIG. 11. An embodiment of a user interface 1000 that facilitates live viewing is now described.

The general process of retrieving live video images is started upon the selection of a particular camera 312. Selection of a particular camera 312 can be facilitated by the same type of user interface represented by frame 910 in FIG. 9A. After a camera 312 has been selected, a user interface 1010 within general live image user interface 1000 is presented. User interface 1010 is rendered by View application 610 running on client workstation 322.

User interface 1010 includes live image viewing window 1012, start button 1014, and stop button 1016. Upon the initiation of View application 610, client workstation 322 proceeds to send requests to off-site server 332 for the "live" image file (e.g., live_1.jpg) stored in the directory assigned to the selected camera 312. As noted, the retrieval of the "live" image file may not occur at the same rate as the rate at which the "live" image file is being updated. In this case, live image viewing window 1012 would simply show a sample of the live video images that are being captured by the selected camera 312. If the images being captured from selected camera 312 are also being archived, then the complete set of video images would be stored in image database 334.

The basic user interface 1010 simply enables the viewing of live images. In another embodiment, a live viewing user interface 1000 can also include the real-time control of the selected camera 312. Two examples of the real-time camera control interface are illustrated as user interface 1020 and user interface 1030 in FIG. 10B and FIG. 10C, respectively. User interfaces 1020 and 1030 are rendered by ViewControl application 620 running on client workstation 322. In performing the real-time camera control functionality, ViewControl application 620 communicates with CameraControl application 520 on off-site server 332.

User interface 1020 illustrates a scenario where camera server 314 is able to return current PTZ positions of camera 312. The receipt of this state information (i.e., PTZ) enables client workstation 322 to provide camera controls relative to an absolute position. These camera controls are illustrated in user interface 1020 as pan scrollbar 1022, tilt scrollbar 1024, and zoom scrollbar 1026. The effect of the manipulation of any one of pan scrollbar 1022, tilt scrollbar 1024, and zoom scrollbar 1026 will be seen instantaneously in the live image that is displayed in viewing image window 1012. User interface 1020 also includes a scrollable list 1028 that enables a user at client workstation 322 to select from among a variety of preset camera positions.

User interface 1030, on the other hand, illustrates a scenario where camera server 314 is not able to return current PTZ positions of camera 312. As client workstation 322 does not have knowledge of the current PTZ state of camera 312, client workstation 322 can only provide camera controls on a relative basis. These relative camera controls are illustrated in user interface 1030 as Pan&Tilt controls (UpLeft, Up, UpRight, Left, Right, DownLeft, Down, and DownRight) 1032 and Zoom controls (In, Out, Fast In, and Fast Out) 1034. The effect of the manipulation of any one of Pan&Tilt controls 1032 and Zoom controls 1034 will be seen instantaneously in the live image that is displayed in viewing image window 1012.

User interface 1030 also includes a scrollable list 1028 that enables a user at client workstation 322 to select from among a variety of preset camera positions. Although user interface 1030 represents a scenario where camera server 314 is not able to return current PTZ positions of camera 312, camera 312 may enable storage of presets on the camera itself. These presets can be accessible through an application programming interface (API).

In a preferred embodiment, ViewControl application 620 is a multithreaded applet, wherein both live image loading and camera control have their own distinct thread. As described above, live image loading is accomplished through the request and subsequent transfer of the live video image file (e.g., live_1.jpg) associated with the selected camera 312. This live image file can be stored in a directory that is associated with the selected camera 312.

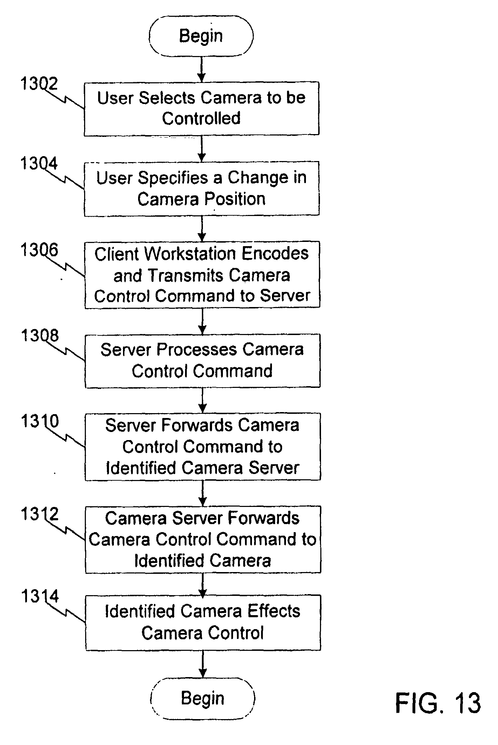

While live image loading represents a transaction between client workstation 322 and off-site server 332, camera control represents a transaction between client workstation 322, off-site server 332, camera server 314, and camera 312. This transaction is illustrated in the flowchart of FIG. 13.

The camera control process begins at step 1302 with a user selecting a camera 312 to be controlled. This selection process has been described above in the context of both live video image loading and archived video image retrieval. In the illustrated embodiment, the selection of a camera 312 is facilitated by a hierarchical menu of a client's network of surveillance cameras 312. After a camera 312 has been selected by the user, the live image loading thread of ViewControl application 620 can begin to request and display live video images that are stored in a "live" file by off-site server 332.

The live viewing user interface 1000 presented to the user will depend upon the camera 312 that has been selected by the user. As noted, the live viewing user interface is dependent on whether off-site server 332 is able to retrieve state information from camera 312. If state information is available, then user interface 1020 containing absolute PTZ controls 1022, 1024, 1026 is presented. If state information is not available, then user interface 1030 containing relative PTZ controls 1032, 1034 is presented.

Assume that the user is presented with user interface 1020, which contains absolute PTZ controls 1022, 1024, 1026. After activation of start button 1014, the user is now presented with a display of live video images in image viewing window 1012. The user can now choose to interactively change the live view in image viewing window 1012 using absolute controls 1022, 1024, 1026. For example, the user can decide to zoom in on a particular object or person that is displayed in image viewing window 1012 or pan in a direction of a particular object or person that is on the edge of image viewing window 1012. The specification by the user of a particular change in a camera's PTZ position is represented as step 1304.

Having received the user's specification of a change in a camera's PTZ position, the camera control thread in ViewControl application 620 then submits, at step 1306, a camera control command to CameraControl application 520 to effect the user's specified camera position change. In one embodiment, the camera control command submitted by client workstation 322 includes the following information: an IP address of the camera server, a camera number, a camera control command code, and a camera/camera server type.

In a preferred embodiment, the IP address of the camera server 314 is transmitted as a sequence of five octets. Four of the five octets represent an encoded IP address, while the fifth octet is used as a conversion parameter. The encoding of the IP address of the camera server 312 by client workstation 322 serves to obscure the IP address as the command is transmitted over public network 350. Although not required, this encoding serves to keep confidential, the IP addresses of camera servers 314 that are coupled to private network 340. As one of ordinary skill in the relevant art would appreciate, various methods of encoding IP addresses could be used and the present invention is not limited by a particular encoding method.

The camera number information (e.g., value between 1-4) serves to identify the particular camera 312 that is coupled to the camera server 314 identified by the encoded IP address. This identification enables the camera control command to be routed by the identified camera server 314 to the proper camera 312.

The camera control command code is used to specify the particular camera control selected by the user. In the context of the user interface 1020 having absolute PTZ controls 1022. 1024, 1026, the camera control command code can designate one of PanAbsolute, TiltAbsolute, and ZoomAbsolute commands. In the context of user interface 1030 containing relative PTZ controls 1032, 1034, the camera control command code can designate one of UpLeft, Up, UpRight, Right, DownRight, Down, DownLeft, ZoomIn, ZoomOut, ZoomInFast, and ZoomOutFast commands. As would be appreciated by one of ordinary skill in the relevant art, parameters for each of these camera commands can also be transmitted with the camera control command code.

The camera/camera server type information specifies the type of environment existing at client site 310. Depending upon the combination of camera 312 and camera server 314, state information may not be retrievable. For example, the combination of an AXIS 240 camera server with a Sony/Cannon camera enables the retrieval of state information, while the combination of an AXIS 240 camera with a Pelco camera does not enable the retrieval of state information. The transmission of the camera/camera server type by client workstation 322 thereby enables CameraControl application 520 to perform an additional check to ensure that the received camera control command code (e.g., absolute PTZ control code) is proper for the particular camera/camera server combination.

After the camera control command is generated by client workstation 322, the camera control command is transmitted to CameraControl application 520. At step 1308, CameraControl application 520 processes the received camera control command. In this processing step, CameraControl application 520 decodes the encoded IP address and parses the camera control command code to determine the action that is desired by the user. The parsed camera control command is then converted into a binary-coded camera control command string that is recognizable by the particular camera 312.

In general, CameraControl application 520 functions as a proxy application, providing the user with a single standardized graphical user interface, while customized libraries communicate the individual protocols required by each manufacturer's camera. The interposing CameraControl application 520 provides an abstraction layer, making the customized PTZ operation appear transparent to the user. More generally, CameraControl application 520 can be used to provide single standardized graphical user interfaces to control other devices in client site 310, including such devices as a multiplexer, an audio/video switch, time lapse VCRs, etc.

After the camera control command has been processed by CameraControl application 520 on off-site server 332, the processed camera control command is transmitted, at step 1310, to the camera server 314 identified by the decoded IP address. Next, at step 1312, the camera server 314 forwards the binary-coded camera control command string to the camera 312 identified by the camera number provided in the camera control command. Finally, at step 1314, camera 312 effects the intended camera control based upon the received binary-coded camera control command string.

In a typical state of operation, camera server 314 is responding to a continual stream of requests by ImageCapture application 510 for images that are being captured by a plurality of cameras 312A-312D coupled to camera server 314. The processing of this continual stream of image forwarding requests can introduce latency effects in the processing of camera control commands. These latency effects can result in significant loss of camera control. Accordingly, in an alternative embodiment, camera control commands are not forwarded to camera servers 314. Rather, camera control commands are forwarded to a separately addressable device (not shown) at client site 310 that is associated with a camera server 314. The separately addressable device is solely responsible for receiving camera control commands from off-site server 332 and for forwarding camera control commands to individual cameras 312. As the separately addressable device is not being inundated with image forwarding requests from off-site server 332, delays in processing camera control commands is thereby minimized.

As thus described, the present invention provides a framework for real-time off-site video image storage that enables increased functionality in the retrieval of video images. As compared to conventional surveillance and monitoring systems 100, 200 that are focused on activities at single client sites, the present invention seeks to extend the surveillance and monitoring activities to a global scale.

Off-site storage site 330 is capable of receiving video images from thousands of video feeds. Millions of hours of video recording representing hundreds of terabytes of information can be stored in off-site storage site 330. Due to its design as a scalable enterprise, however, these figures are merely illustrative of the potential scale of the present invention.

While the invention has been described in detail and with reference to specific embodiments thereof, it will be apparent to one skilled in the art that various changes and modifications can be made therein without departing from the scope thereof. Thus, it is intended that the present invention cover the modifications and variations of this invention provided they come within the scope of the appended claims.

## Claims

1. A video surveillance and monitoring system, the system comprising:
a private network (340) operable to enable two-way communication with a plurality of surveillance cameras (312) at a plurality of geographically distinct client sites (310);
an off-site storage and control site (330) including at least one server (332), the server (332) in communication with the private network (340), wherein the server (332) is operable to obtain video images from the surveillance cameras (312); and
at least one client workstation (322) in communication with the server (332) via a public network (350), wherein the server(332) is operable to transmit video images generated by the surveillance cameras (312) to the client workstation (322) via the public network (350);
wherein the server (332) is further operable to archive the video images generated by the surveillance cameras (312) for subsequent transmittal to the client workstation (322).

2. The system as recited in Claim 1, wherein the off-site storage site (330) further includes an image database for archiving the video images generated by the surveillance cameras (312).

3. The system as recited in Claim 1, wherein the private network (340) is a virtual private network configured over a public network.

4. The system as recited in Claim 1 further comprising a camera server (314) in communication with the private network (340), the camera server (314) operable to communicate with the one or more surveillance cameras (312).

5. The system as recited in Claim 4, wherein the one or more surveillance cameras (312) produce NTSC video signals, and wherein the camera server (312) is operable to capture the NTSC video signals and convert the captured NTSC video signals.

6. The system as recited in Claim 4, wherein the one or more surveillance cameras (312) include a self-contained web server and network camera.

7. The system as recited in Claim 4, wherein the server (332) is further operable to obtain a camera control code associated with an inputted surveillance camera control command.

8. The system as recited in Claim 7, wherein the camera control code identifies an absolute pan-tilt-zoom control command.

9. The system as recited in Claim 7, wherein the camera control code identifies a relative pan-tilt-zoom control command.

10. The system as recited in Claim 7, wherein the server (332) is further operable to obtain and process an encoded Internet Protocol address of the camera server (314).

11. The system as recited in Claim 7, wherein the server (332) is further operable to generate a binary-coded command string corresponding to the surveillance camera control code.

12. The system as recited in Claim 11, wherein the server (332) is further operable to forward binary-coded command string to the camera server (314).

13. The system as recited in Claim 12, wherein the camera server (314) is further operable to forward the binary-coded command string to a separately addressable device operable to obtain and distribute command strings.

14. The system as recited in Claim 1, wherein the server (332) is further operable to store real-time video data to a data file that is retrievable by the client workstation (322).

15. The system as recited in Claim 14, wherein the data file is a temporary file, and wherein the server (332) is further operable to save the temporary file in a manner retrievable by the client workstation (322).

16. The system as recited in Claim 14, wherein the data file includes a date-time value.

17. The system as recited in Claim 16, wherein the date-time value includes a time offset value.

18. The system as recited in Claim 14, wherein the server (332) utilizes a configuration file to process the real-time video data in the data file.

19. The system as recited in Claim 18, wherein the server (332) is further operable to send a notification corresponding to an event processing parameter in the configuration file.

20. The system as recited in Claim 19, wherein the notification is a text page.

21. The system as recited in Claim 19, wherein the notification is an electronic mail message.

22. The system as recited in Claim 21, wherein the electronic message includes at least a portion of the real-time video data corresponding to the determined event.

23. The system as recited in Claim 18, wherein the server (332) is further operable to request additional video data corresponding to an event processing parameter in a the configuration file.

24. The system as recited in Claim 18, wherein the server (332) is further operable to associate a time-zone offset to the real time video data, the time-zone offset corresponding to a time-zone offset parameter in the configuration file.

25. The system as recited in Claim 18, wherein the server (332) is further operable to control the retrieval of the real time video data corresponding to a time parameter in the configuration file.

26. The system as recited in Claim 1, wherein the server (332) is further operable to generate a camera control code instructing one or more of the surveillance cameras (314) to move to a pre-defined position.

27. The system as recited in Claim 26, wherein the server (332) is further operable to generate the camera control code after a designated period of time.

28. The system as recited in Claim 26, wherein the server (332) is further operable to generate a series of camera control codes instructing one or more of the surveillance cameras (314) to move to a series of pre-defined positions.

29. The system as recited in Claim 1, wherein the server (332) is further operable to generate an interface for displaying real-time video image data from a plurality of client sites (310).

30. The system as recited in Claim 29, wherein the interface is a Web-based interface.

31. The system as recited in Claim 30, wherein the Web-based interface includes a calendar interface, wherein the calendar interface includes a number of hyperlinks (920), the hyperlinks (920) corresponding to defined periods of time and operable to generate additional screen interfaces corresponding to a time selection.

32. The system as recited in Claim 31, wherein the hyperlinks (320) correspond to months in a year and wherein the hyperlinks are operable to generate additional screen interfaces presenting a user with a selection of a particular time to control a surveillance camera (312).

33. The system as recited in Claim 1, wherein the server (332) is further operable to extract real-time video data from at least one surveillance camera (312) utilizing a dynamic data block data management schema.

34. A video surveillance and monitoring method for use in an environment including at least one off-site storage and control server (332) coupled to a private network (340) that enables communication with a plurality of surveillance cameras (312) at a plurality of geographically distinct client sites (310) and to a public network (350), the method comprising:
obtaining at the off-site storage and control server video image data from a plurality of surveillance cameras (312) corresponding to said remote client sites (310) via said private network;
producing at the off-site storage and control server the video image data as live images and transmitting said video data as live images to at least one client workstation (322) via said public network; and
archiving the video image data at the off-site server (332) for subsequent transmittal to at least one client workstation (322).

35. The method as recited Claim 34, wherein producing the video image data includes storing live video image data to a file that is retrievable by a client workstation (322).

36. The method as recited in Claim 34, wherein producing the video image includes writing live video image data to a temporary file, and renaming said temporary file to the file that is retrievable by a client workstation (322).

37. The method as recited in Claim 34, wherein archiving the video image data includes creating a video image record to be stored in an image database.

38. The method as recited in Claim 37, wherein archiving the video image data includes creating a video image record that includes video image data and a date-time value.

39. The method as recited in Claim 38, wherein the data-time value includes a time-zone offset value.

40. The method as recited in Claim 34 further comprising:
obtaining a configuration file corresponding to the video image data; and
processing the video image data according to the configuration file.

41. The method as recited in Claim 40, wherein processing the video image data according to the configuration file includes sending a text page to one or more recipients alerting said one or more recipients of the occurrence of an event.

42. The method as recited in Claim 40, wherein processing the video image data according to the configuration file includes issuing a request for video image data.

43. The method as recited in Claim 40, wherein processing the video image data according to the configuration file includes sending an electronic mail message to one or more recipients alerting said one or more recipients of the occurrence of said event, said electronic mail message include at least part of said requested video image data.

44. The method as recited in Claim 40, wherein processing the video image data according to the configuration file includes associating a time-zone offset to the video image data.

45. The method as recited in Claim 34 further comprising generating at least one camera control code instructing one or more surveillance cameras (312) to move to a pre-defined location.

46. The method as recited in Claim 45, wherein generating at least one camera control code includes generating a number of camera control codes instructing a surveillance camera (312) to move to a series of pre-defined locations.

47. The method as recited in Claim 45, wherein generating at least one camera control code includes generating at least one camera control code after a designated time period has expired.

48. The method as recited in Claim 34 producing the video image data includes generating a user interface for displaying the video image data.

49. The method as recited in Claim 48, wherein the user interface is a Web-based user interface.

50. The method as recited in Claim 49, wherein the Web-based interface includes a calendar interface, wherein the calendar interface includes a number of hyperlinks (920), the hyperlinks (920) corresponding to defined periods of time and operable to generate additional screen interfaces corresponding to a time selection.

51. The method as recited in Claim 50, wherein the hyperlinks (320) correspond to months in a year and wherein the hyperlinks are operable to generate additional screen interfaces presenting a user with a selection of a particular time to control a surveillance camera (312).

52. The method as recited in Claim 34 further comprising:
obtaining a communication from a client workstation (322) coupled to the public network (350), the communication including a camera control command code representative of a user's desired type of camera control;
converting said received camera control command to a binary-coded command string; and
sending said binary-coded command string to an identified address on said private network (340), said identified address being associated with an identified surveillance camera (312).

53. The method as recited in Claim 52, wherein obtaining a communication from the client workstation (322) includes receiving a camera control code that identifies an absolute pan-tilt-zoom control.

54. The method as recited in Claim 52, wherein obtaining a communication from the client workstation (322) includes receiving a camera control code that identifies a relative pan-tilt-zoom control.

55. The method as recited in Claim 52, wherein obtaining a communication from the client workstation (322) includes receiving an address on said private network to which said binary-coded command string should be sent.

56. The method as recited in Claim 55, wherein an address includes an Internet Protocol address.

57. The method as recited in Claim 56, wherein obtaining a communication includes receiving a surveillance camera number.

## Patentansprüche

1. Ein Videoüberwachungs- und Beobachtungssystem, wobei das System umfasst:
- ein privates Netzwerk (340), welches betriebsfähig ist, um eine Zwei-Wege-Kommunikation mit einer Mehrzahl von Überwachungskameras (312) an einer Mehrzahl von geographisch unterschiedlichen Nutzerorten (310) zu ermöglichen,
- einen abgelegenen Speicher- und Steuerungsort (330) einschließlich mindestens einen Server (332), wobei der Server (332) in Verbindung mit dem privaten Netzwerk (340) ist und wobei der Server (332) betriebsfähig ist, um Videobilder von den Überwachungskameras (312) zu erhalten; und
- mindestens eine Nutzerarbeitsstation (323), die über ein öffentliches Netzwerk (350) in Kommunikation mit dem Server (332) steht, wobei der Server (332) betriebsfähig ist, um durch die Überwachungskameras (312) erzeugte Videobilder an die Nutzerarbeitsstation (322) über das öffentliche Netzwerk (350) zu übermitteln;
- wobei der Server (332) desweiteren betriebsfähig ist, um die durch die Überwachungskameras (312) erzeugten Videobilder für eine spätere Übermittlung an die Nutzerarbeitsstation (322) zu archivieren.

2. Das System gemäß Anspruch 1, wobei der abgelegene Speicherort (330) desweiteren eine Bilddatenbank zur Archivierung der durch die Überwachungskameras (312) erzeugten Videobilder besitzt.

3. Das System gemäß Anspruch 1, wobei das private Netzwerk (340) ein über ein öffentliches Netzwerk konfiguriertes virtuelles privates Netzwerk ist.

4. Das System gemäß Anspruch 1, desweiteren umfassend einen Kameraserver (314), der in Verbindung mit dem privaten Netzwerk (340) steht, wobei der Kameraserver (314) betriebsfähig ist, um mit der einen oder mehreren Überwachungskameras (312) zu kommunizieren.

5. Das System gemäß Anspruch 4, wobei die eine oder mehreren Überwachungskameras (312) NTSC Videosignale produzieren und wobei der Kameraserver (312) betriebsfähig ist, um die NTSC Videosignale aufzufangen und die aufgefangenen NTSC Videosignal zu konvertieren.

6. Das System gemäß Anspruch 4, wobei die eine oder mehreren Überwachungskameras (312) einen eigenständigen Webserver und Netzwerkkamera besitzt.

7. Das System gemäß Anspruch 4, wobei der Server (332) desweiteren betriebsfähig ist, um einen Kamerasteuerungscode zu erhalten, der einem eingegebenen Überwachungskamerasteuerungsbefehl zugeordnet ist.

8. Das System gemäß Anspruch 7, wobei der Kamerasteuerungscode einen absoluten Schwenk-Kipp-Zoom-Steuerungsbefehl angibt.

9. Das System gemäß Anspruch 7, wobei der Kamerasteuerungscode einen relativen Schwenk-Kipp-Zoom-Steuerungsbefehl angibt.

10. Das System gemäß Anspruch 7, wobei der Server (332) desweiteren betriebsfähig ist, um eine codierte Internetprotokolladresse des Kameraservers (314) zu erhalten und zu verarbeiten.

11. Das System gemäß Anspruch 7, wobei der Server (332) desweiteren betriebsfähig ist, um einen dem Überwachungskamerasteuerungscode zugehörigen binärkodierten Befehlsstring zu erzeugen.

12. Das System gemäß Anspruch 11, wobei der Server (332) desweiteren betriebsfähig ist, um den binärkodierten Befehlsstring zu dem Kameraserver (314) weiterzuleiten.

13. Das System gemäß Anspruch 12, wobei der Kameraserver (314) desweiteren betriebsfähig ist, um den binärkodierten Befehlsstring an eine separat adressierbare Vorrichtung weiterzuleiten, die betriebsfähig ist, um Befehlsstrings zu erhalten und zu verteilen.

14. Das System gemäß Anspruch 1, wobei der Server (332) desweiteren betriebsfähig ist, um Echtzeitvideodaten in einer Datendatei zu speichern, die von der Nutzerarbeitsstation (322) wieder auffindbar ist.

15. Das System gemäß Anspruch 14, wobei die Datendatei eine temporäre Datei ist und wobei der Server (332) desweiteren betriebsfähig ist, um die temporäre Datei in einer für die Nutzerarbeitsstation (322) wieder auffindbaren Weise zu sichern.

16. Das System gemäß Anspruch 14, wobei die Datendatei einen Datum-Zeit-Wert besitzt.

17. Das System gemäß Anspruch 16, wobei der Datum-Zeit-Wert einen Zeitabweichungswert besitzt.

18. Das System gemäß Anspruch 14, wobei der Server (332) eine Konfigurationsdatei nutzt, um die Echtzeitvideodaten in der Datendatei zu verarbeiten.

19. Das System gemäß Anspruch 18, wobei der Server (332) desweiteren betriebsfähig ist, um eine Mitteilung zu senden, die sich auf einen Ereignisprozessparameter in der Konfigurationsdatei bezieht.

20. Das System gemäß Anspruch 19, wobei die Mitteilung eine Textseite ist.

21. Das System gemäß Anspruch 19, wobei die Mitteilung eine elektronische Mailnachricht ist.

22. Das System gemäß Anspruch 21, wobei die elektronische Nachricht mindestens einen Teil der Echtzeitvideodaten enthält, die sich auf das vorbestimmte Ereignis beziehen.

23. Das System gemäß Anspruch 18, wobei der Server (332) desweiteren betriebsfähig ist, um zusätzliche Videodaten anzufordern, die sich auf einen Ereignisprozessparameter in der Konfigurationsdatei beziehen.

24. Das System gemäß Anspruch 18, wobei der Server (323) desweiteren betriebsfähig ist, um den Echtzeitvideodaten eine Zeitzonenabweichung zuzuordnen, wobei die Zeitzonenabweichung zu einem Zeitzonenabweichungsparameter in der Konfigurationsdatei korrespondiert.

25. Das System gemäß Anspruch 18, wobei der Server (332) desweiteren betriebsfähig ist, um das Wiederauffinden der Echtzeitvideodaten entsprechend einem Zeitparameter in der Konfigurationsdatei zu steuern.

26. Das System gemäß Anspruch 1, wobei der Server (332) desweiteren betriebsfähig ist, um einen Kamerasteuerungscode zu erzeugen, der eine oder mehrere der Überwachungskameras (314) instruiert, sich in eine vorbestimmte Position zu bewegen.

27. Das System gemäß Anspruch 26, wobei der Server (332) desweiteren betriebsfähig ist, den Kamerasteuerungscode nach einer bestimmten Zeitspanne zu erzeugen.

28. Das System gemäß Anspruch 26, wobei der Server (332) desweiteren betriebsfähig ist, um eine Reihe von Kamerasteuerungscoden zu erzeugen, die eine oder mehrere der Überwachungskameras (314) instruieren, sich in eine Reihe von vorbestimmten Positionen zu bewegen.

29. Das System gemäß Anspruch 1, wobei der Server (332) desweiteren betriebsfähig ist, eine Schnittstelle zum Anzeigen von Echtzeitvideobilddaten von einer Mehrzahl von Nutzerorten (310) zu erzeugen.

30. Das System gemäß Anspruch 29, wobei die Schnittstelle eine Web-basierte Schnittstelle ist.

31. Das System gemäß Anspruch 30, wobei die Web-basierte Schnittstelle eine Kalenderschnittstelle ist, wobei die Kalenderschnittstelte eine Anzahl von Hyperlinks (920) besitzt, wobei die Hyperlinks (920) definierten Zeitspannen zugehörig sind und betriebsfähig sind, um zusätzliche Bildschirmschnittstellen entsprechend einer Zeitauswahl zu erzeugen.

32. Das System gemäß Anspruch 31, wobei die Hyperlinks (320) Monaten in einem Jahr entsprechen und wobei die Hyperlinks betriebsfähig sind, um zusätzliche Bildschirmschnittstellen zu erzeugen, die einem Nutzer eine Auswahl von einer bestimmten Zeit präsentieren, um eine Überwachungskamera (312) zu steuern.

33. Das System gemäß Anspruch 1, wobei der Server (332) desweiteren betriebsfähig ist, um Echtzeitvideodaten aus mindestens einer Überwachungskamera (312) unter Verwendung eines dynamischen Datenblockdateimanagementschemas zu extrahieren.

34. Ein Videoüberwachungs- und -beobachtungsverfahren zur Verwendung in einer Umgebung, die mindestens einen abgelegenen Speicher- und Steuerungsserver (332) besitzt, der an ein privates Netzwerk (340), das die Kommunikation mit einer Mehrzahl von Überwachungskameras (312) an einer Mehrzahl von geographisch unterschiedlichen Nutzerorten (310) ermöglicht, und an ein öffentliches Netzwerk (350) gekoppelt ist, wobei das Verfahren umfasst:
- Erhalten von Videobilddaten an dem abgelegenen Speicher- und Steuerungsserver von einer Mehrzahl von Überwachungskameras (312), die den entfernten Nutzerorten (310) zugehören, über das private Netzwerk;
- Erzeugen der Videobilddaten als Livebilder an dem abgelegenen Speicherund Steuerungsserver und Übermitteln der Videodaten als Livebilder an zumindest eine Nutzerarbeitsstation (322) über das öffentliche Netzwerk, und
- Archivieren der Videobilddaten an dem abgelegenen Server (332) für eine spätere Übermittlung an mindestens eine Nutzerarbeitsstation (322).

35. Das Verfahren gemäß Anspruch 34, wobei das Erzeugen der Videobilddaten die Speicherung von Livevideobilddaten in einer Datei einschließt, welche von einer Nutzerarbeitsstation (322) wieder auffindbar ist.

36. Das Verfahren gemäß Anspruch 34, wobei das Erzeugen der Videobilder das Schreiben von Livevideobilddaten in eine temporäre Datei und das Umbenennen der temporären Datei in die Datei, welche durch die Nutzerarbeitsstation (322) wieder auffindbar ist, einschließt.

37. Das Verfahren gemäß Anspruch 34, wobei das Archivieren der Videobilddaten das Erzeugen einer in einer Bilddatenbank zu speichernden Videobildaufnahme einschließt.

38. Das Verfahren gemäß Anspruch 37, wobei das Archivieren der Videobilddaten das Erzeugen einer Videobildaufnahme einschließt, welche Videobilddaten und einen Datum-Zeit-Wert enthält.

39. Das Verfahren gemäß Anspruch 38, wobei der Datum-Zeit-Wert einen Zeitzonenabweichungswert enthält.

40. Das Verfahren gemäß Anspruch 34, desweiteren umfassend:
- Erhalten einer Konfigurationsdatei, die den Videobilddaten zugehörig ist; und
- Verarbeiten der Videobilddaten gemäß der Konfigurationsdatei.

41. Das Verfahren gemäß Anspruch 40, wobei das Verarbeiten der Videobilddaten gemäß der Konfigurationsdatei das Senden einer Textseite an einen oder mehrere Empfänger einschließt, die den einen oder die mehreren Empfänger auf das Auftreten eines Ereignisses aufmerksam macht.

42. Das Verfahren gemäß Anspruch 40, wobei das Verarbeiten der Videobilddaten gemäß der Konfigurationsdatei das Ausgeben einer Anfrage nach Videobilddaten einschließt.

43. Das Verfahren gemäß Anspruch 40, wobei das Verarbeiten der Videobilddaten gemäß der Konfigurationsdatei das Senden einer elektronischen Mailnachricht an eine oder mehrere Empfänger einschließt, welche den einen oder die mehreren Empfänger auf das Auftreten des Ereignisses aufmerksam macht, wobei die elektronische Mailnachricht mindestens einen Teil der angeforderten Videobilddaten enthält.

44. Das Verfahren gemäß Anspruch 40, wobei das Verarbeiten der Videobilddaten gemäß der Konfigurationsdatei das Zuordnen einer Zeitzonenabweichung zu den Videobilddaten einschließt.

45. Das Verfahren gemäß Anspruch 34, desweiteren umfassend das Erzeugen mindestens eines Kamerasteuerungscodes, welcher eine oder mehrere Überwachungskameras (312) instruiert, sich an eine vorbestimmte Stelle zu bewegen.

46. Das Verfahren gemäß Anspruch 45, wobei das Erzeugen des mindestens einen Kamerasteuerungscodes das Erzeugen einer Anzahl von Kamerasteuerungscodes einschließt, die eine Überwachungskamera (312) veranlassen, sich an eine Reihe von vorbestimmten Stellen zu bewegen.

47. Das Verfahren gemäß Anspruch 45, wobei das Erzeugen des mindestens einen Kamerasteuerungscodes das Erzeugen von mindestens einem Kamerasteuerungscode einschließt, nachdem eine bestimmte Zeitspanne abgelaufen ist.

48. Das Verfahren gemäß Anspruch 34, wobei das Erzeugen der Videobilddaten das Erzeugen einer Nutzerschnittstelle zum Anzeigen der Videobilddaten einschließt.

49. Das Verfahren gemäß Anspruch 48, wobei die Nutzerschnittstelle eine Web-basierte Nutzerschnittstelle ist.

50. Das Verfahren gemäß Anspruch 49, wobei die Web-basierte Schnittstelle eine Kalenderschnittstelle besitzt, wobei die Kalenderschnittstelle eine Anzahl von Hyperlinks (920) besitzt, wobei die Hyperlinks (920) definierten Zeitspannen zugehörig sind und betriebsfähig sind, um zusätzliche Bildschirmschnittstellen entsprechend einer Zeitauswahl zu erzeugen.

51. Das Verfahren gemäß Anspruch 50, wobei die Hyperlinks (320) Monaten in einem Jahr entsprechen und wobei die Hyperlinks betriebsfähig sind, um zusätzliche Bildschirmschnittstellen zu erzeugen, die einem Nutzer eine Auswahl von einer bestimmten Zeit präsentieren, um eine Überwachungskamera (312) zu steuern.

52. Das Verfahren gemäß Anspruch 34, desweiteren umfassend:
- Erhalten einer Nachricht von einer an das öffentliche Netzwerk (350) gekoppelten Nutzerarbeitsstation (322), wobei die Nachricht einen Kamerasteuerungsbefehlscode enthält, der für einen vom Nutzer gewünschten Kamerasteuerungstyp repräsentativ ist;
- Konvertieren des empfangenen Kamerasteuerungsbefehls in einen binärkodierten Befehlsstring; und
- Senden des binärkodierten Befehlsstrings an eine angegebene Adresse in einem privaten Netzwerk (340), wobei die angegebene Adresse einer angegebenen Überwachungskamera (312) zugeordnet ist.

53. Das Verfahren gemäß Anspruch 52, wobei das Erhalten einer Nachricht von einer Nutzerarbeitsstation (322) das Empfangen eines Kamerasteuerungscodes einschließt, der eine absolute Schwenk-Kipp-Zoom-Steuerung angibt.

54. Das Verfahren gemäß Anspruch 52, wobei das Erhalten einer Nachricht von einer Nutzerarbeitsstation (322) das Empfangen eines Kamerasteuerungscodes einschließt, der eine relative Schwenk-Kipp-Zoom-Steuerung angibt.

55. Das Verfahren gemäß Anspruch 52, wobei das Erhalten einer Nachricht von einer Nutzerarbeitsstation (322) das Empfangen einer Adresse in dem privaten Netzwerk einschließt, zu der der binärkodierte Befehlsstring gesendet werden soll.

56. Das Verfahren gemäß Anspruch 55, wobei eine Adresse eine Internetprotokolladresse enthält.

57. Das Verfahren gemäß Anspruch 56, wobei das Erhalten einer Nachricht das Empfangen einer Überwachungskameranummer einschließt.

## Revendications

1. Système de vidéosurveillance et de contrôle, le système comprenant :
un réseau privé (340) utilisable pour permettre la communication bilatérale avec une pluralité de caméras de surveillance (312) sur une pluralité de sites clients géographiquement distincts (310) ;
un site (330) de commande hors site et de stockage comprenant au moins un serveur (332), le serveur (332) étant en communication avec le réseau privé (340), dans lequel le serveur (332) est utilisable pour obtenir des images vidéo des caméras de surveillance (312) ; et
au moins une station de travail cliente (322) en communication avec le serveur (332) via un réseau public (350), dans lequel le serveur (332) est utilisable pour transmettre des images vidéo générées par les caméras de surveillance (312) vers la station de travail cliente (322) via le réseau public (350) ;
dans lesquels le serveur (332) est en outre utilisable pour archiver les images vidéo générées par les caméras de surveillance (312) pour transmission ultérieure à la station de travail cliente (322).

2. Système selon la revendication 1, dans lequel le site (330) de stockage hors site comprend en outre une base de données d'images pour l'archivage des images vidéo générées par les caméras de surveillance (312).

3. Système selon la revendication 1, dans lequel le réseau privé (340) est un réseau privé virtuel configuré sur un réseau public.

4. Système selon la revendication 1, comprenant en outre un serveur (314) de caméras en communication avec le réseau privé (340), le serveur (314) de caméras étant utilisable pour communiquer avec la une ou plusieurs caméras de surveillance (312).

5. Système selon la revendication 4, dans lequel une ou plusieurs caméras de surveillance (312) produisent des signaux vidéo NTSC et dans lequel le serveur (314) de caméras est utilisable pour capturer les signaux vidéo NTSC et convertir les signaux vidéo NTSC capturés.

6. Système selon la revendication 4, dans lequel la une ou plusieurs caméras de surveillance (312) comprend un serveur web autonome et une caméra de réseau.

7. Système selon la revendication 4, dans lequel le serveur (332) est en outre utilisable pour obtenir un code de commande de caméra associé à une commande de caméra de surveillance entrée.

8. Système selon la revendication 7, dans lequel le code de commande de caméra identifie une commande de panoramique absolu, d'inclinaison verticale et de zoom.

9. Système selon la revendication 7, dans lequel le code de commande de caméra identifie une commande de panoramique relatif, d'inclinaison verticale et de zoom.

10. Système selon la revendication 7, dans lequel le serveur (332) est en outre utilisable pour obtenir et traiter une adresse de protocole Internet codée du serveur (314) de caméras.

11. Système selon la revendication 7, dans lequel le serveur (332) est en outre utilisable pour générer une chaîne de commandes codées binaires correspondant au code de commande des caméras de surveillance.

12. Système selon la revendication 11, dans lequel le serveur (332) est en outre utilisable pour réacheminer la chaîne de commandes codées binaires vers le serveur (314) de caméras.

13. Système selon la revendication 12, dans lequel le serveur (314) de caméras est en outre utilisable pour réacheminer la chaîne de commandes codées binaires vers un périphérique adressable séparément utilisable pour obtenir et distribuer des chaînes de commandes.

14. Système selon la revendication 1, dans lequel le serveur (332) est en outre utilisable pour stocker des données vidéo temps réel dans un fichier de données qui est récupérable par la station de travail cliente (322).

15. Système selon la revendication 14, dans lequel le fichier de données est un fichier temporaire, et dans lequel le serveur (332) est en outre utilisable pour enregistrer le fichier temporaire d'une manière récupérable par la station de travail cliente (322).

16. Système selon la revendication 14, dans lequel le fichier de données comprend une valeur d'horodatage.

17. Système selon la revendication 16, dans lequel la valeur d'horodatage comprend une valeur de décalage temporel.

18. Système selon la revendication 14, dans lequel le serveur (332) utilise un fichier de configuration pour traiter les données vidéo temps réel dans le fichier de données.

19. Système selon la revendication 18, dans lequel le serveur (332) est en outre utilisable pour envoyer une notification correspondant à un paramètre de traitement d'événement dans le fichier de configuration.

20. Système selon la revendication 19, dans lequel la notification est une page de texte.

21. Système selon la revendication 19, dans lequel la notification est un message de courrier électronique.

22. Système selon la revendication 21, dans lequel le message électronique comprend au moins une partie des données vidéo temps réel correspondant à l'événement déterminé.

23. Système selon la revendication 18, dans lequel le serveur (332) est en outre utilisable pour demander des données vidéo supplémentaires correspondant à un paramètre de traitement d'événement dans un ou le fichier de configuration.

24. Système selon la revendication 18, dans lequel le serveur (332) est en outre utilisable pour associer un décalage de fuseau horaire aux données vidéo temps réel, le décalage de fuseau horaire correspondant à un paramètre de décalage de fuseau horaire dans le fichier de configuration.

25. Système selon la revendication 18, dans lequel le serveur (332) est en outre utilisable pour commander la récupération des données vidéo temps réel correspondant à un paramètre temporel dans le fichier de configuration.

26. Système selon la revendication 1, dans lequel le serveur (332) est en outre utilisable pour générer plusieurs des caméras de surveillance (314) de se déplacer vers une position prédéfinie.

27. Système selon la revendication 26, dans lequel le serveur (332) est en outre utilisable pour générer le code de commande de caméra après une période de temps désignée.

28. Système selon la revendication 26, dans lequel le serveur (332) est en outre utilisable pour générer une série de codes de commande de caméras commandant à une ou plusieurs des caméras de surveillance (314) de se déplacer vers une série de positions prédéfinies.

29. Système selon la revendication 1, dans lequel le serveur (332) est en outre utilisable pour générer une interface pour afficher des données d'image vidéo temps réel issues d'une pluralité de sites clients (310).

30. Système selon la revendication 29, dans lequel l'interface est une interface à base Web.

31. Système selon la revendication 30, dans lequel l'interface à base Web comprend une interface de calendrier, dans laquelle l'interface de calendrier comprend un certain nombre de liens hypertexte (920), les liens hypertexte (920) correspondant à des périodes de temps définies et utilisables pour générer des interfaces d'écran supplémentaires correspondant à une sélection temporelle.

32. Système selon la revendication 31, dans lequel les liens hypertexte (320) correspondent aux mois d'une année et dans lequel les liens hypertexte sont utilisables pour générer des interfaces d'écran supplémentaires présentant à un utilisateur une sélection d'une heure particulière pour commander une caméra de surveillance (312).

33. Système selon la revendication 1, dans lequel le serveur (332) est en outre utilisable pour extraire des données vidéo temps réel d'au moins une caméra de surveillance (312) en utilisant un schéma de gestion dynamique des blocs de données.

34. Procédé de vidéosurveillance et de contrôle destiné à être utilisé dans un environnement comprenant au moins un serveur (332) hors site de stockage et de commande couplé à un réseau privé (340) qui permet la communication avec une pluralité de caméras de surveillance (312) sur une pluralité de sites clients (310) géographiquement distincts et avec un réseau public (350), le procédé comprenant :
l'obtention au niveau du serveur hors site de stockage et de commande de données d'images vidéo issues d'une pluralité de caméras de surveillance (312) correspondant auxdits sites clients distants (310) via ledit réseau privé ;
la production au niveau du serveur hors site de stockage et de commande de données d'images vidéo comme images transmises en direct à au moins une station de travail cliente (322) via ledit réseau public ; et
l'archivage des données d'images vidéo dans le serveur (332) hors site pour transmission ultérieure à au moins une station de travail cliente (322).

35. Procédé selon la revendication 34, dans lequel la production des données d'images vidéo comprend le stockage des données d'images vidéo directes dans un fichier qui est récupérable par une station de travail cliente (322).

36. Procédé selon la revendication 34, dans lequel la production des données d'images vidéo comprend l'écriture des données d'images vidéo directes dans un fichier temporaire, et le renommage dudit fichier temporaire dans le fichier qui est récupérable par une station de travail cliente (322).

37. Procédé selon la revendication 34, dans lequel l'archivage des données d'images vidéo comprend la création d'un enregistrement d'images vidéo à stocker dans une base de données d'images.

38. Procédé selon la revendication 37, dans lequel l'archivage des données d'images vidéo comprend la création d'un enregistrement d'images vidéo qui comprend des données d'images vidéo et une valeur d'horodatage.

39. Procédé selon la revendication 38, dans lequel la valeur d'horodatage comprend une valeur de décalage de fuseau horaire.

40. Procédé selon la revendication 34 comprenant en outre :
l'obtention d'un fichier de configuration correspondant aux données d'images vidéo ; et
le traitement des données d'images vidéo en fonction du fichier de configuration.

41. Procédé selon la revendication 40, dans lequel le traitement des données d'images vidéo en fonction du fichier de configuration comprend la transmission d'une page de texte à un ou plusieurs destinataires pour alerter lesdits un ou plusieurs destinataires de la survenance d'un événement.

42. Procédé selon la revendication 40, dans lequel le traitement des données d'images vidéo en fonction du fichier de configuration comprend l'émission d'une demande de données d'images vidéo.

43. Procédé selon la revendication 40, dans lequel le traitement des données d'images vidéo en fonction du fichier de configuration comprend l'envoi d'un message de courrier électronique à un ou plusieurs destinataires pour alerter lesdits un ou plusieurs destinataires de la survenance dudit événement, ledit message de courrier électronique comprenant au moins une partie desdites données d'images vidéo demandées.

44. Procédé selon la revendication 40, dans lequel le traitement des données d'images vidéo en fonction du fichier de configuration comprend l'association d'un décalage de fuseau horaire aux données d'images vidéo.

45. Procédé selon la revendication 34, comprenant en outre la génération d'au moins un code de commande de caméra commandant à une ou plusieurs caméras de surveillance (312) de se déplacer vers un emplacement prédéfini.

46. Procédé selon la revendication 45, dans lequel la génération d'au moins un code de commande de caméra comprend la génération d'un certain nombre de codes de commande de caméras commandant à une caméra de surveillance (312) de se déplacer vers une série d'emplacements prédéfinis.

47. Procédé selon la revendication 45, dans lequel la génération d'au moins un code de commande de caméra comprend la génération d'au moins un code de commande de caméra après qu'une période de temps désignée se soit écoulée.

48. Procédé selon la revendication 34, dans lequel la production des données d'images vidéo comprend la génération d'une interface utilisateur pour l'affichage des données d'images vidéo.

49. Procédé selon la revendication 48, dans lequel l'interface utilisateur est une interface utilisateur à base Web.

50. Procédé selon la revendication 49, dans lequel l'interface à base Web comprend une interface de calendrier, dans lequel l'interface de calendrier comprend un certain nombre de liens hypertexte (920), les liens hypertexte (920) correspondant à des périodes de temps définies et utilisables pour générer des interfaces d'écran supplémentaires correspondant à une sélection temporelle.

51. Procédé selon la revendication 50, dans lequel les liens hypertexte (320) correspondent aux mois d'une année et dans lequel les liens hypertexte sont utilisables pour générer des interfaces d'écran supplémentaires présentant à un utilisateur une sélection d'une heure particulière pour commander une caméra de surveillance (312).

52. Procédé selon la revendication 34 comprenant en outre :
l'obtention d'une communication d'une station de travail cliente (322) couplée au réseau public (350), la communication comprenant un code de commande de caméra représentatif d'une commande de caméra du type désiré par l'utilisateur ;
la conversion de ladite commande de caméra reçue en une chaîne de commandes codées binaires ; et
l'envoi de ladite chaîne de commandes codées binaires à une adresse identifiée sur ledit réseau privé (340), ladite adresse identifiée étant associée à une caméra de surveillance (312) identifiée.

53. Procédé selon la revendication 52, dans lequel l'obtention d'une communication de la station de travail cliente (322) comprend la réception d'un code de commande de caméra qui identifie une commande de panoramique absolu, d'inclinaison verticale et de zoom.

54. Procédé selon la revendication 52, dans lequel l'obtention d'une communication de la station de travail cliente (322) comprend la réception d'un code de commande de caméra qui identifie une commande de panoramique relatif, d'inclinaison verticale et de zoom.

55. Procédé selon la revendication 52, dans lequel l'obtention d'une communication de la station de travail cliente (322) comprend la réception d'une adresse sur ledit réseau privé à laquelle ladite chaîne de commandes codées binaires doit être envoyée.

56. Procédé selon la revendication 55, dans lequel une adresse comprend une adresse de protocole Internet.

57. Procédé selon la revendication 56, dans lequel l'obtention d'une communication comprend la réception d'un numéro de caméra de surveillance.
